# EUROPÄISCHE PATENTSCHRIFT

(11) **EP 2 496 637 B1**
(45) Veröffentlichungstag und Bekanntmachung des Hinweises auf die Patenterteilung: **07.10.2015**
(21) Anmeldenummer: 10771472.7
(22) Anmeldetag: 02.11.2010
(51) Int. Cl.: C08L 55/02, C08L 25/12, C08K 5/12, C08K 5/1539

(54) **THERMOPLASTISCHE ZUSAMMENSETZUNGEN MIT VERBESSERTER FLIEßFÄHIGKEIT**
THERMOPLASTIC COMPOSITIONS HAVING IMPROVED FLOWABILITY
COMPOSITIONS THERMOPLASTIQUES AYANT UNE FLUIDITÉ AMÉLIORÉE

(30) Priorität: 03.11.2009 EP 09174900
(43) Veröffentlichungstag der Anmeldung: 12.09.2012
(73) Patentinhaber: Styrolution Europe GmbH, 60325 Frankfurt am Main (DE)
(72) Erfinder: MEHLER, Christof, 69221 Dossenheim (DE); MINKWITZ, Rolf, 68167 Mannheim (DE); SCHADE, Christian, 67063 Ludwigshafen (DE); CHAROENSIRISOMBOON, Piyada, 67251 Freinsheim (DE); NIEßNER, Norbert, 67159 Friedelsheim (DE); SHON, Kyung Ho, 308346 Singapore (KR)
(74) Vertreter: Jacobi, Markus Alexander
(86) Internationale Anmeldenummer: PCT/EP2010/066574
(87) Internationale Veröffentlichungsnummer: WO 2011/054781

(56) Entgegenhaltungen:
- EP-A1- 1 808 457
- DE-A1-102005 028 752
- DE-A1-102008 051 258

## Beschreibung

Die vorliegende Erfindung betrifft Zusammensetzungen enthaltend
(i) mindestens eine Formmasse enthaltend die Komponenten A und B als Komponente (I), worin bedeuten
   A) ein Pfropfcopolymerisat als Komponente A, umfassend
      a1) 30 bis 90 Gew.-%, bezogen auf Komponente A, einer Pfropfgrundlage erhältlich durch Umsetzung von
      a1.1) 50 bis 100 Gew.-%, bezogen auf Komponente a1, mindestens eines konjugierten Diens, und
      a1.2) 0 bis 50 Gew.-%, bezogen auf Komponente a1, mindestens eines weiteren monoethylenisch ungesättigten Monomeren, und
      a2) 10 bis 70 Gew.-%, bezogen auf Komponente A, einer Pfropfauflage erhältlich durch Umsetzung von
      a2.1) 60 bis 95 Gew.-%, bezogen auf Komponente a2, mindestens eines vinylaromatischen Monomeren, besonders bevorzugt Styrol und/oder α-Methylstyrol,
      a2.2) 5 bis 40 Gew.-%, bezogen auf Komponente a2, Acrylnitril und
      a2.3) 0 bis 35 Gew.-%, bezogen auf Komponente a2, mindestens eines weiteren monoethylenisch ungesättigten Monomeren
      in Gegenwart der Pfropfgrundlage a1, und
   B) eine thermoplastisches Copolymer als Komponente B erhältlich durch Umsetzung von
      b1) 60 bis 100 Gew.-%, bezogen auf Komponente B, mindestens eines vinylaromatischen Monomeren, besonders bevorzugt Styrol und/oder α-. Methylstyrol,
      b2) 0 bis 40 Gew.-%, bezogen auf Komponente B, Acrylnitril, und
      b3) 0 bis 40 Gew.-%, bezogen auf Komponente B, mindestens eines weiteren monoethylenisch ungesättigten Monomeren;
(ii) mindestens ein Cyclohexanpolycarbonsäurederivat der Formel (I); als Komponente (II) 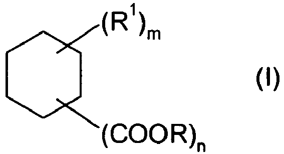 worin
   - R¹: für C₁-C₁₀-Alkyl oder C₃-C₈-Cycloalkyl steht,
   - m: für 0, 1, 2 oder 3 steht,
   - n: für 2, 3 oder 4 steht, und
   - R: für Wasserstoff oder C₁-C₃₀-Alkyl steht; oder die Gruppe -(COOR)ₙ bildet ein Anhydrid der Formel 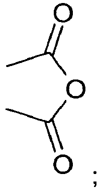
(iii) gegebenenfalls ein oder mehrere weitere Polymere als Komponente (III);
(iv) gegebenenfalls einen oder mehrere Zusatzstoffe als Komponente (IV); und
(v) gegebenenfalls einen oder mehrere Füll- und/oder Verstärkungsstoffe als Komponente (V),
ein Verfahren zur Herstellung der erfindungsgemäßen Zusammensetzung, die Verwendung der erfindungsgemäßen Zusammensetzung zur Herstellung von Formkörpern, Folien, Schäumen oder Fasern und Formkörper, Folien, Schäume oder Fasern enthaltend die erfindungsgemäße Zusammensetzung.

Im Stand der Technik sind zahlreiche Zusammensetzungen auf der Basis von Styrol-Acrylnitril-Copolymeren (SAN) oder den mit einem Butadienkautschuk schlagzähmodifizierten Acrylnitril-Butadien-Styrol-Copolymerisaten (ABS) bekannt und für verschiedene Anwendungszwecke beschrieben.

Beispielsweise werden in DE 20 2007 016 189 U1 Mischungen aus ABS, einem Phthalat mit einer aliphatischen Alkoholkomponente und wenigstens einem weiteren Copolymer offenbart, die verbesserte Verarbeitungseigenschaften im Hinblick auf die Viskosität und die Schlagzähigkeit aufweisen. Nähere Angaben zum ABS, insbesondere dessen Kautschukgehalt, werden nicht gemacht.

Die WO 00/78853 A1 beschreibt die Verwendung von Cyclohexanpolycarbonsäuren und deren Derivaten als Weichmacher in Kunststoffen, wobei diese Cyclohexanpolycarbonsäuren und deren Derivate gegenüber Phthalaten aus toxikologischer Sicht bevorzugt sind. Auf die Kunststoffe selbst wird in dieser Schrift nicht detailliert eingegangen.

Die Europäische Patentanmeldung 08165358.6 (Aktenzeichen) beschreibt Zusammensetzungen auf Basis Acrylnitril-Styrol-Acrylester-Copolymerisate (ASA), ABS oder SAN, die mindestens ein Cyclohexanpolycarbonsäurederivat und mindestens ein Wachs enthalten, und die sich mit möglichst geringem Energieaufwand verarbeiten lassen. Der Pfropfkautschukgehalt beträgt laut dieser Schrift 10 bis 80 Gew.-%, bevorzugt 20 bis 70 Gew.-%, besonders bevorzugt 25 bis 60 Gew.-%, bezogen auf das Gesamtgewicht aus Pfropfkautschuk und thermoplastischem Copolymer. In den in dieser Schrift offenbarten Beispielen wird ASA eingesetzt.

Die im Stand der Technik beschriebenen Zusammensetzungen sind u.a. zur Herstellung von Formkörpern, beispielsweise im Spritzgießverfahren, geeignet. Dabei ist es insbesondere bei der Herstellung dünnwandiger und/oder großflächiger Formteile wünschenswert, leichtfließende Formmassen einsetzen zu können, wobei die erhaltenen Formteile in der Regel eine möglichst hohe mechanische Stabilität und hohe Zähigkeit aufweisen sollen. Auch sollen während oder nach der Herstellung der Formteile keine Additive an die Oberfläche des Formteils migrieren.

Der vorliegenden Erfindung lag daher die Aufgabe zugrunde, Zusammensetzungen auf Basis von Styrolcopolymeren und toxikologisch unbedenklichen Weichmachern bereitzustellen, die gegenüber den im Stand der Technik beschriebenen Formmassen eine verbesserte Fließfähigkeit bei der Herstellung von Formkörpern aufweisen, gute oder verbesserte mechanischen Eigenschaften besitzen und/oder bei denen auch bei erhöhter Temperatur keine Migration des Weichmachers an die Oberfläche entsprechender Formteile auftritt.

Diese Aufgabe wird gelöst durch die vorstehend genannten Zusammensetzungen, wobei erfindungswesentlich ist, dass die Komponente (I) 11 bis 19,9 Gew.-% der Komponente A und 80,1 bis 89 Gew.-% der Komponente B umfasst, wobei die Gew.-% jeweils bezogen sind auf die Summe der Komponenten A und B und zusammen 100 Gew.-% ergeben.

Die erfindungsgemäßen Zusammensetzungen enthaltend die speziell gewählten Mengenanteile der Komponenten A und B sowie Komponente II weisen gegenüber den im Stand der Technik beschriebenen vergleichbaren Formmassen eine verbesserte Fließfähigkeit bei der Herstellung von Formkörpern, gute oder verbesserte mechanischen Eigenschaften und/oder auch bei erhöhter Temperatur keine Migration des Weichmachers an die Oberfläche entsprechender Formteile auf.

Die Erfindung wird im Folgenden näher erläutert.

Die erfindungsgemäßen Zusammensetzungen enthalten im Allgemeinen
(i) 95 bis 99,99 Gew.-%, bevorzugt 96 bis 99,9 Gew.-%, besonders bevorzugt 97 bis 99,5 Gew.-% der Komponente (I); und
(ii) 0,01 bis 5 Gew.-%, bevorzugt 0,1 bis 4 Gew.-%, besonders bevorzugt 0,5 bis 3 Gew.-% der Komponente (II);
   wobei die Gewichtsprozente jeweils bezogen sind auf das Gesamtgewicht der Komponenten I und II und zusammen 100 Gew.-% ergeben; und
(iii) 0 bis 50 Gew.-%, bevorzugt 0 bis 20 Gew.-%, besonders bevorzugt 0,05 bis 15 Gew.-%, jeweils bezogen auf das Gesamtgewicht der Komponenten I und II, der Komponente (III);
(iv) 0 bis 50 Gew.-%, bevorzugt 0 bis 40 Gew.-%, besonders bevorzugt 0,05 bis 30 Gew.-%, jeweils bezogen auf das Gesamtgewicht der Komponenten I und II, der Komponente (IV); und
(v) 0 bis 50 Gew.-%, bevorzugt 0 bis 40 Gew.-%, besonders bevorzugt 0,05 bis 30 Gew.-%, jeweils bezogen auf das Gesamtgewicht der Komponenten I und II, der Komponente (V).

### Komponente (I)

Die in den erfindungsgemäßen Zusammensetzungen enthaltene Komponente (I) umfasst die Komponenten A und B, worin bedeuten
A) ein Pfropfcopolymerisat als Komponente A, umfassend
   a1) 30 bis 90 Gew.-%, bezogen auf Komponente A, einer Pfropfgrundlage erhältlich durch Umsetzung von
   a1.1) 50 bis 100 Gew.-%, bezogen auf Komponente a1, mindestens eines konjugierten Diens, und
   a1.2) 0 bis 50 Gew.-%, bezogen auf Komponente a1, mindestens eines weiteren monoethylenisch ungesättigten Monomeren, und
   a2) 10 bis 70 Gew.-%, bezogen auf Komponente A, einer Pfropfauflage erhältlich durch Umsetzung von
   a2.1) 60 bis 95 Gew.-%, bezogen auf Komponente a2, mindestens eines vinylaromatischen Monomeren, besonders bevorzugt Styrol und/oder α-Methylstyrol,
   a2.2) 5 bis 40 Gew.-%, bezogen auf Komponente a2, Acrylnitril und
   a2.3) 0 bis 35 Gew.-%, bezogen auf Komponente a2, mindestens eines weiteren monoethylenisch ungesättigten Monomeren
   in Gegenwart der Pfropfgrundlage a1, und
B) eine thermoplastisches Copolymer als Komponente B erhältlich durch Umsetzung von
   b1) 60 bis 100 Gew.-%, bezogen auf Komponente B, mindestens eines vinylaromatischen Monomeren, besonders bevorzugt Styrol und/oder α-Methylstyrol,
   b2) 0 bis 40 Gew.-%, bezogen auf Komponente B, Acrylnitril, und
   b3) 0 bis 40 Gew.-%, bezogen auf Komponente B, mindestens eines weiteren monoethylenisch ungesättigten Monomeren;
wobei erfindungswesentlich ist, dass die Komponente (I) 11 bis 19,9 Gew.-% der Komponente A und 80,1 bis 89 Gew.-% der Komponente B umfasst, wobei diese Gew.-% jeweils bezogen sind auf die Summe der Komponenten A und B und zusammen 100 Gew.-% ergeben.

Die Komponente (I) enthält
11 bis 19,9 Gew.-%, bevorzugt 15 bis 19,5 Gew.-%, besonders bevorzugt 17 bis 19,3 Gew.-%, der Komponente A und
80,1 bis 89 Gew.-%, bevorzugt 80,5 bis 85 Gew.-%, besonders bevorzugt 80,7 bis 83 Gew.-%, der Komponente B,
wobei die Gew.-% jeweils bezogen sind auf die Summe der Komponenten A und B und zusammen 100 Gew.-% ergeben.

Unter dem im Folgenden verwendeten Ausdruck (Meth)acrylsäure bzw. (Meth)acrylat wird im Sinne der vorliegenden Anmeldung Acrylsäure und/oder Methacrylsäure bzw. Acrylat und/oder Methacrylat verstanden.

Das Pfropfcopolymerisat A umfasst
als Pfropfgrundlage 30 bis 90 Gew.-%, bevorzugt 40 bis 80 Gew.-%, besonders bevorzugt 45 bis 70 Gew.-% der Komponente a1, und
als Pfropfauflage (Pfropfhülle) 10 bis 70 Gew.-%, bevorzugt 20 bis 60 Gew.-%, besonders bevorzugt 30 bis 55 Gew.-% der Komponente a2
(die Gew.-% sind jeweils bezogen auf das Gewicht der Komponente A und ergeben zusammen 100 Gew.-%).

Die Pfropfgrundlage a1 ist erhältlich durch Umsetzung von
50 bis 100 Gew.-%, bevorzugt 70 bis 100 Gew.-%, besonders bevorzugt 85 bis 100 Gew.-% Komponente a1.1, und
0 bis 50 Gew.-%, bevorzugt 0 bis 30 Gew.-%, besonders bevorzugt 0 bis 15 Gew.-% Komponente a1.2 (die Gew.-% sind jeweils bezogen auf das Gewicht der Komponente a1 und ergeben zusammen 100 Gew.-%).

Die Pfropfauflage a2 ist erhältlich durch Umsetzung von
60 bis 95 Gew.-%, bevorzugt 65 bis 80 Gew.-%, besonders bevorzugt 70 bis 75 Gew.-% Komponente a2.1,
5 bis 40 Gew.-%, bevorzugt 20 bis 35 Gew.-%, besonders bevorzugt 25 bis 30 Gew.-% Komponente a2.2, und
0 bis 35 Gew.-%, bevorzugt 0 bis 15 Gew.-%, besonders bevorzugt 0 bis 5 Gew.-% Komponente a2.3 (die Gew.-% sind jeweils bezogen auf das Gewicht der Komponente a2 und ergeben zusammen 100 Gew.-%), in Gegenwart der Pfropfgrundlage a1.

Das thermoplastische Copolymer B ist erhältlich durch Umsetzung von 60 bis 100 Gew.-%, bevorzugt 60 bis 85 Gew.-%, besonders bevorzugt 65 bis 82 Gew.-% Komponente b1,
0 bis 40 Gew.-%, bevorzugt 15 bis 40 Gew.-%, besonders bevorzugt 18 bis 35 Gew.-% Komponente b.2, und
0 bis 40 Gew.-%, bevorzugt 0 bis 25 Gew.-%, besonders bevorzugt 0 bis 17 Gew.-% Komponente b.3 (die Gew.-% sind jeweils bezogen auf das Gewicht der Komponente B und ergeben zusammen 100 Gew.-%).

Als Komponente a1.1 sind erfindungsgemäß ein oder mehrere konjugierte Diene einsetzbar.

Bevorzugte als Komponenten a1.1 eingesetzte konjugierte Diene sind Butadien, Isopren, Chloropren oder deren Mischungen. Bevorzugt werden 1,3-Butadien oder Isopren oder deren Mischungen eingesetzt, besonders bevorzugt 1,3-Butadien.

Als weitere monoethylenisch ungesättigte Monomere a1.2 können beispielsweise eingesetzt werden:
vinylaromatische Monomere wie Styrol oder Styrolderivate wie C₁- bis C₈-Alkylstyrol, beispielsweise α-Methylstyrol, Acrylnitril, Methacrylnitril; weiterhin auch die Glycidylester, Glycidylacrylat und -methacrylat; N-substituierte Maleinimide wie N-Methyl-, N-Phenyl- und N-Cyclohexylmaleinimid; Acrylsäure; Methacrylsäure; weiterhin Dicarbonsäuren wie Maleinsäure; stickstofffunktionelle Monomere wie Dimethylaminoethylacrylat, Diethylaminoethylacrylat; Vinylimidazol, Vinylpyrrolidon, Vinylcaprolactam, Vinylcarbazol, Vinylanilin; aliphatische, aromatische und araliphatische Ester der Acrylsäure und Methacrylsäure wie Methyl(meth)acrylat, n-Butyl(meth)acrylat, Phenylacrylat, Phenylmethacrylat, Benzylacrylat, Benzylmethacrylat, 2-Phenylethylacrylat, 2-Phenylethylmethacrylat, 2-Phenoxyethylacrylat und 2-Phenoxyethylmethacrylat; ungesättigte Ether wie Vinylmethylether; sowie Mischungen aus zwei oder mehr dieser Monomeren. Bevorzugte Monomere a1.3 sind Styrol, α-Methylstyrol, Acrylnitril, Glycidylacrylat, oder -methacrylat oder Mischungen davon, insbesondere Styrol.

In einer weiteren bevorzugten Ausführungsform wird eine Pfropfgrundlage hergestellt aus, bezogen auf a1),
a1.1) 100 Gew.-% Butadien
   oder
a1.1) 70 bis 99,9 Gew.-%, bevorzugt 90 bis 99 Gew.-% Butadien, und
a1.2) 0,1 bis 30 Gew.-%, bevorzugt 1 bis 10 Gew.-% Styrol.

Als Komponente a2.1 wird im allgemeinen Styrol, α-Methylstyrol oder ein Gemisch dieser Verbindungen eingesetzt, bevorzugt ist Styrol.

Komponente a.2.2 ist Acrylnitril.

Als Komponente a2.3 sind prinzipiell alle von den Komponenten a2.1 und a2.2 verschiedene ungesättigten Monomere einsetzbar. Geeignete Verbindungen sind beispielsweise die bereits als Komponente a1.2 genannten monoethylenisch ungesättigten Monomere (ausgenommen Styrol, α- Methylstyrol und Acrylnitril), wobei Methylmethacrylat, Glycidylacrylat, oder - methacrylat bevorzugt sind.

Als Komponente b1 wird im allgemeinen Styrol, α-Methylstyrol oder ein Gemisch dieser Verbindungen eingesetzt, bevorzugt ist Styrol.

Komponente b2 ist Acrylnitril.

Als Komponente b3 sind die bereits als Komponente a2.3 genannten ungesättigten Monomere geeignet.

Bevorzugte Komponenten B sind Polystyrol, SAN, Poly-α-Methylstyrol-Acrylnitril oder deren Mischungen.

Bei der Komponente A handelt es sich um ein Pfropfcopolymerisat umfassend eine Pfropfgrundlage a1 und mindestens eine Pfropfauflage a2. Das Pfropfcopolymerisat A kann einen mehr oder weniger perfekt ausgeprägten Kern-Schale-Aufbau aufweisen (Pfropfgrundlage a1 stellt den Kern dar, die Pfropfauflage a2 die Schale), es ist aber auch möglich, dass die Pfropfauflage a2 die Pfropfgrundlage a1 nur unvollständig umschließt bzw. bedeckt oder aber auch die Pfropfauflage a2 die Pfropfgrundlage a1 ganz oder teilweise durchdringt.

Die Pfropfgrundlage a1 kann in einer Ausführungsform der Erfindung einen sogenannten Kern enthalten, der aus einem weichen kautschukelastischen Polymerisat oder einem harten Polymerisat gebildet werden kann; in den Ausführungsformen, in denen die Pfropfgrundlage a1 einen Kern enthält, wird der Kern bevorzugt aus einem harten Polymerisat, insbesondere Polystyrol oder einem Styrolcopolymer, gebildet. Solche Pfropfkerne und deren Herstellung sind dem Fachmann bekannt und beispielsweise in EP-A 535456 und EP-A 534212 beschrieben.

Selbstverständlich ist es auch möglich, zwei oder mehr Pfropfgrundlagen a1 einzusetzen, die sich beispielsweise in ihrer Zusammensetzung oder in der Teilchengröße voneinander unterscheiden. Solche Mischungen unterschiedlicher Pfropfgrundlagen können nach dem Fachmann an sich bekannten Methoden hergestellt werden, beispielsweise indem zwei oder mehr Kautschuklatices separat hergestellt und die entsprechenden Dispersionen vermischt werden, aus den entsprechenden Dispersionen separat die Feucht-Kautschuke gefällt und beispielsweise in einem Extruder gemischt werden oder die entsprechenden Dispersionen separat vollständig aufgearbeitet und die erhaltenen Pfropfgrundlagen anschließend vermischt werden.

Das Pfropfcopolymerisat A kann zwischen der Pfropfgrundlage a1 und der Pfropfauflage a2 ein oder mehrere weitere Pfropfauflagen bzw. -hüllen oder -schalen aufweisen - beispielsweise mit anderen Monomerzusammensetzungen-, bevorzugt weist das Pfropfcopolymer A aber außer der Pfropfauflage a2 keine weiteren Pfropfauflagen bzw. -hüllen oder -schalen auf.

Das Polymerisat der Pfropfgrundlage a1 hat üblicherweise eine Glasübergangstemperatur unter 0°C, vorzugsweise eine Glasübergangstemperatur unter -20°C, insbesondere unter -30°C. Ein Polymerisat aus den die Pfropfauflage a2 bildenden Monomeren besitzt üblicherweise eine Glasübergangstemperatur von mehr als 30°C, insbesondere mehr als 50°C (jeweils ermittelt nach DIN 53765).

Die Pfropfcopolymerisate A haben üblicherweise eine mittlere Teilchengröße d₅₀ von 50 - 1200 nm, bevorzugt von 50 - 1000 nm und besonders bevorzugt von 50 - 850 nm. Diese Teilchengrößen können erzielt werden, wenn man als Pfropfgrundlage a1 Teilchengrößen von 50 - 1000 nm, bevorzugt von 50 - 700 nm und besonders bevorzugt von 50 - 600 nm verwendet. Gemäß einer Ausführungsform der Erfindung ist die Teilchengrößenverteilung monomodal.

Gemäß einer weiteren erfindungsgemäßen Ausführungsform ist die Teilchengrößenverteilung der Komponente A bimodal, wobei 60 - 90 Gew.-% eine mittlere Teilchengröße von 50 - 200 nm und 10 - 40 Gew.-% eine mittlere Teilchengröße von 200 - 850 nm aufweisen, bezogen auf das Gesamtgewicht der Komponente A.

Als mittlere Teilchengröße bzw. Teilchengrößenverteilung werden die aus der integralen Massenverteilung bestimmten Größen angegeben. Bei diesen und den weiteren im Rahmen der vorliegenden Erfindung genannten mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z. und Z.-Polymere 250 (1972), Seiten 782 - 796, bestimmt wurden.

Die Herstellung der Komponente (I) umfasst mindestens die folgenden Verfahrensschritte:

Die Herstellung der Pfropfgrundlage a1 kann durch Emulsions-, Lösungs-, Masse- oder Suspensionspolymerisation der Komponenten a1.1 und a1.2, - Aufbringen einer Pfropfauflage a2 durch Polymerisation der Komponenten a2.1, a2.2 und a2.3 in Gegenwart der Pfropfgrundlage a1, und Schmelzevermischung des Pfropfcopolymerisats A mit einem separat hergestellten thermoplastischen Copolymer B erfolgen.

Diese sowie die im Folgenden noch beschriebenen optionalen weiteren Verfahrensschritte können nach dem Fachmann an sich bekannten und/oder in der Literatur beschriebenen Methoden durchgeführt werden.

Die Pfropfcopolymerisate A können durch Pfropfpolymerisation der Komponenten a2.1, ggf. a2.2 und ggf. a2.3 auf mindestens eine der vorstehend aufgeführten Pfropfgrundlagen a1 hergestellt werden.

Geeignete Herstellverfahren für Pfropfcopolymerisate A sind die Emulsions-, Lösungs-, Masse- oder Suspensionspolymerisation. Bevorzugt werden die Pfropfcopolymerisate A durch radikalische Emulsionspolymerisation hergestellt in Gegenwart von Latices der Komponente a1 bei Temperaturen von 20°C - 90°C unter Verwendung wasserlöslicher oder öllöslicher Initiatoren wie Peroxodisulfat oder Benzylperoxid, oder mit Hilfe von Redoxinitiatoren. Redoxinitiatoren eignen sich auch zur Polymerisation unterhalb von 20°C.

Geeignete Polymerisationsverfahren sind beispielsweise beschrieben in den WO 02/10222, DE-A 28 26 925, 31 49 358 und in der DE-C 12 60 135.

Der Aufbau der Pfropfauflagen erfolgt vorzugsweise im Emulsionspolymerisationsverfahren, wie es beispielsweise beschrieben ist in DE-A 32 27 555, 31 49 357, 31 49 358, 34 14 1 18. Das definierte Einstellen der erfindungsgemäßen Teilchengrößen erfolgt bevorzugt nach den Verfahren, die beschrieben sind in der DE-C 12 60 135 und DE-A 28 26 925, bzw. Applied Polymer Science, Band 9 (1965), Seite 2929. Das Verwenden von Polymerisaten mit unterschiedlichen Teilchengrößen ist beispielsweise bekannt aus DE-A 28 26 925 und US-A 5 196 480.

Analog zu dem in der DE-C 12 60 135 beschriebenen Verfahren wird zunächst die Pfropfgrundlage a1 hergestellt, indem der oder die gemäß einer Ausführungsform der Erfindung verwendeten Diene a1.1, ggf. zusammen mit den weiteren monoethylenisch ungesättigten Monomeren a1.2, in wässriger Emulsion in an sich bekannter Weise bei Temperaturen zwischen 20 und 100°C, vorzugsweise zwischen 50 und 90°C, polymerisiert werden. Es können die üblichen Emulgatoren, wie beispielsweise Alkali- salze von Alkyl- oder Alkylarylsulfonsäuren, Alkylsulfate, Fettalkoholsulfonate, Salze höherer Fettsäuren mit 10 bis 30 Kohlenstoffatomen oder Harzseifen verwendet werden. Vorzugsweise verwendet man die Natriumsalze von Alkylsulfonaten oder Fettsäuren mit 10 bis 18 Kohlenstoffatomen. Gemäß einer Ausführungsform werden die Emulgatoren in Mengen von 0,5 - 5 Gew.-%, insbesondere von 0,7 - 2 Gew.-%, bezogen auf die bei der Herstellung der Pfropfgrundlage a1 eingesetzten Monomeren, eingesetzt. Im allgemeinen wird bei einem Gewichtsverhältnis von Wasser zu Monomeren von 4 : 1 bis 0,6 : 1 gearbeitet. Als Polymerisationsinitiatoren dienen insbesondere die gebräuchlichen Persulfate, wie beispielsweise Kaliumpersulfat. Es können jedoch auch Redoxsysteme zum Einsatz gelangen. Die Initiatoren werden im allgemeinen in Mengen von 0,1 - 1 Gew.-%, bezogen auf die bei der Herstellung der Pfropfgrundlage a1 eingesetzten Monomeren, eingesetzt. Als weitere Polymerisationshilfsstoffe können die üblichen Puffersubstanzen, durch welche pH-Werte von vorzugsweise 6 - 9 eingestellt werden, wie Natriumbicarbonat und Natriumpyrophosphat, sowie 0 - 3 Gew.-% eines Molekulargewichtsreglers, wie Mercaptane, Terpinole oder dimeres α-Methylstyrol, bei der Polymerisation verwendet werden.

Die genauen Polymerisationsbedingungen, insbesondere Art, Dosierung und Menge des Emulgators, werden innerhalb der oben angegebenen Bereiche im einzelnen so bestimmt, dass der erhaltene Latex des Dienpolymerisats a1 einen d₅₀-Wert im Bereich von etwa 50 - 1000 nm, vorzugsweise 50 - 700 nm, besonders bevorzugt im Bereich von 50 - 600 nm, besitzt. Die Teilchengrößenverteilung des Latex soll dabei vorzugsweise eng sein.

Zur Herstellung des Pfropfpolymerisats A wird sodann in einem nächsten Schritt in Gegenwart des so erhaltenen Latex des Dienpolymerisats a1 gemäß einer Ausführungsform der Erfindung ein Monomerengemisch aus Komponente a2.1 , bevorzugt Styrol, Komponente a2.2, Acrylnitril, und ggf. Komponente a2.3 polymerisiert. Dabei können die Monomeren a2.1, a2.2 und ggf. a2.3 einzeln oder in Mischung miteinander zugefügt werden. Beispielsweise kann man zunächst Styrol alleine, und danach eine Mischung aus Styrol und Acrylnitril pfropfen. Es ist vorteilhaft, diese Pfropfcopolymerisation auf das als Pfropfgrundlage dienende Dienpolymerisat wieder in wässriger Emulsion unter den üblichen, vorstehend beschriebenen Bedingungen durchzuführen. Die Pfropfcopolymerisation kann zweckmäßig im gleichen System erfolgen wie die Emulsionspolymerisation zur Herstellung der Pfropfgrundlage a1, wobei, falls notwendig, weiterer Emulgator und Initiator zugegeben werden kann. Das gemäß einer Ausführungsform der Erfindung aufzupfropfende Monomerengemisch kann dem Reaktionsgemisch auf einmal, absatzweise in mehreren Stufen -beispielsweise zum Aufbau mehrerer Pfropfauflagen- oder vorzugsweise kontinuierlich während der Polymerisation zugegeben werden. Die Steuerung der Pfropfausbeute bei der Pfropfcopolymerisation und somit des Pfropfgrades des fertigen Pfropfcopolymerisats A ist dem Fachmann geläufig und kann beispielsweise u.a. durch die Dosiergeschwindigkeit der Monomeren oder durch Reglerzugabe erfolgen (Chauvel, Daniel, ACS Polymer Preprints 15 (1974), Seite 329 ff.). Bei der Emulsions-Pfropfcopolymerisation entstehen im allgemeinen etwa 5 - 15 Gew.-%, bezogen auf das Pfropfcopolymerisat, an freiem, ungepfropftem Copolymerisat der Komponenten a2.1, a2.2 und ggf. a2.3. Der Anteil des Pfropfcopolymerisats A in dem bei der Pfropfcopolymerisation erhaltenen Polymerisationsprodukt kann beispielsweise nach der in US-A 2004/0006178 beschriebenen Methode ermittelt werden.

In weiteren Ausführungsformen der erfindungsgemäßen Verfahren kann die Herstellung der Pfropfgrundlage a1 in Gegenwart von Saatpartikeln erfolgen und/oder es kann nach der Herstellung der Pfropfgrundlage a1 und vor dem Aufbringen der Pfropfauflage a2 ein Agglomerationsschritt durchgeführt werden. Diese beiden Verfahrensoptionen sind dem Fachmann bekannt und/oder in der Literatur beschrieben, und werden beispielsweise gewählt, um Teilchengrößen und Teilchengrößenverteilungen gezielt einzustellen.

Saatpartikel haben in der Regel eine Teilchengröße d₅₀ von 10 bis 200 nm, bevorzugt von 10 bis 180 nm, besonders bevorzugt von 10 bis 160 nm. Es wird bevorzugt, Saatpartikel einzusetzen, die eine geringe Breite der Teilchengrößenverteilung haben. Darunter sind Saatpartikel besonders bevorzugt, die eine monomodale Teilchengrößenverteilung haben.

Die Saatpartikel können grundsätzlich aus kautschukelastische Polymere bildenden Monomeren, beispielsweise 1,3-Butadien, aufgebaut sein, oder aus einem Polymeren, dessen Glasübergangstemperatur mehr als 0°C, bevorzugt mehr als 25°C beträgt, aufgebaut sein.

Die Herstellung derartiger Saatpartikel ist dem Fachmann bekannt oder kann nach an sich bekannten Methoden erfolgen. Bevorzugt werden die Saatpartikel durch partikelbildende heterogene Polymerisationsverfahren, bevorzugt durch Emulsionspolymerisation, erhalten. Die Saatpartikel werden erfindungsgemäß vorgelegt, wobei es möglich, ist die Saatpartikel zunächst separat herzustellen, aufzuarbeiten und dann einzusetzen. Es ist aber auch möglich, die Saatpartikel herzustellen und ihnen danach ohne vorherige Aufarbeitung die Monomermischung aus a1.1 und ggf. a1.3 zuzufügen.

Verfahren zur teilweisen oder vollständigen Agglomerisation der Pfropfgrundlage a1 sind dem Fachmann bekannt oder die Agglomerisation kann nach dem Fachmann an sich bekannten Methoden vorgenommen werden (siehe z.B. Keppler et al. Angew. Markomol. Chemie, 2, 1968 Nr. 20, S 1-25). Die Agglomerisationsmethode ist im Prinzip nicht beschränkt. So können physikalische Verfahren wie Gefrier- oder Druckagglomerisationsverfahren verwendet werden. Es können aber auch chemische Methoden eingesetzt werden, um die Pfropfgrundlage zu agglomerisieren. Zu letzteren zählen die Zugabe von Elektroyten oder von anorganischen oder organischen Säuren. Bevorzugt wird die Agglomerisation mittels eines Agglomerisationspolymerisat.es vorgenommen. Als solche sind beispielsweise Polyethylenoxidpolymere, Polyvinylether oder Polyvinylalkohole zu nennen.

Zu den geeigneten Agglomerisationspolymerisaten zählen des weiteren Copolymerisate die C1- bis C12- Alkylacrylate oder C1- bis C12- Methalkylacrylate und polare Comonomere wie Acrylamid, Methacrylamid, Ethacrylamid, n-Butylacrylamid, Maleinsäureamid oder (Meth)acrylsäure enthalten. Neben diesen Monomeren, können diese Copolymerisate aus weiteren Monomeren, darunter Dienen wie Butadien oder Isopren aufgebaut sein.

Die Agglomerisationspolymerisate können einen mehrstufigen Aufbau aufweisen und z. B: einen Kern/Schale-Aufbau haben. Als Kern kommen z.B. Polyacrylate wie Polyethylacrylat und als Schale kommen Teilchen auf (Meth)alkylacrylaten und den genannten polaren Comonomeren in Betracht. Besonders bevorzugtes Agglomerisationspolymerisat ist ein Copolymerisat aus 92 bis 99 Gew.-% Ethylacrylat oder - methacrylat und 1 bis 8 Gew.-% (Meth)acrylamid und/oder (Meth)acrylsäuren. Die Agglomerisationspolymerisate werden in der Regel in Form einer Dispersion eingesetzt. Bei der Agglomeration werden in der Regel von 0,1 bis 5, vorzugsweise von 0,5 bis 3 Gew.-Teile der Agglomerisationspolymerisate auf 100 Gew.-Teile der Pfropfgrundlage eingesetzt.

Die erfindungsgemäßen Pfropfcopolymerisate A können so weiterverwendet werden, wie sie in der Reaktionsmischung anfallen, beispielsweise als Latexemulsion oder - dispersion. Alternativ und wie es für die meisten Anwendungen bevorzugt ist, können sie aber auch in einem weiteren Schritt aufgearbeitet werden. Maßnahmen zur Aufarbeitung sind dem Fachmann bekannt. Dazu zählt z. B, dass die Pfropfcopolymerisate A aus der Reaktionsmischung isoliert werden, z.B. durch Sprühtrocknung, Scherung oder durch Fällen mit starken Säuren oder mittels Nukleierungsmitteln wie anorganischen Verbindungen z.B. Magnesiumsulfat. Die in der Reaktionsmischung vorliegenden Pfropfcopolymerisate A können aber auch dadurch aufgearbeitet werden, dass sie ganz oder teilweise entwässert werden. Ebenso ist es möglich, die Aufarbeitung mittels einer Kombination der genannten Maßnahmen vorzunehmen.

Die thermoplastischen Copolymere B können nach an sich bekannten Verfahren hergestellt werden, wie durch Substanz-, Lösung-, Suspensions- oder Emulsions- Polymerisation, bevorzugt durch Lösungspolymerisation (siehe GB-A 14 72 195). Bevorzugt sind dabei Copolymere B mit Molmassen M_{w} von 60.000 bis 300.000 g/mol, bestimmt durch Lichtstreuung in Dimethylformamid. In einer bevorzugten Ausführungsform der Erfindung wird die Komponente B nach der Herstellung nach dem Fachmann bekannten Verfahren isoliert und vorzugsweise zu Granulat verarbeitet.

### Komponente (II)

Die erfindungsgemäßen Zusammensetzungen weisen als Komponente (II) mindestens ein Cyclohexanpolycarbonsäurederivat der Formel (I) auf: 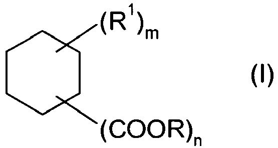 worin
- R¹: für C₁-C₁₀-Alkyl oder C₃-C₈-Cycloalkyl steht,
- m: für 0, 1, 2 oder 3 steht,
- n: für 2, 3 oder 4 steht, und
- R: für Wasserstoff oder C₁-C₃₀-Alkyl, bevorzugt C₁-C₂₀-Alkyl, besonders bevorzugt C₁-C₁₈-Alkyl, ganz besonders bevorzugt C₁-C₁₃-Alkyl, insbesondere C₈-C₁₃-Alkyl steht, wobei mindestens ein Rest R für C₁-C₃₀-Alkyl, bevorzugt C₁-C₂₀-Alkyl, besonders bevorzugt C₁-C₁₈-Alkyl, ganz besonders bevorzugt C₁-C₁₃-Alkyl, insbesondere C₈-C₁₃-Alkyl steht;
oder
die Gruppe -(COOR)ₙ bildet ein Anhydrid der Formel

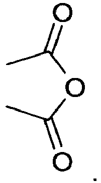

Bei den erfindungsgemäß enthaltenen Cyclohexanpolycarbonsäurederivaten handelt es sich insbesondere um Mono-, Di-, Tri-, Tetraester und Anyhdride der Cyclohexanpolycarbonsäuren. Bevorzugt sind alle Carbonsäuregruppen verestert, d.h. R bedeutet bevorzugt C₁-C₃₀-Alkyl. Der C₁-C₃₀-Alkylrest kann linear, verzweigt oder - im Falle eines Alkylrests mit 3 bis 30 C-Atomen - cyclisch sein. Der C₁-C₃₀-Alkylrest kann des Weiteren z.B. mit C₁-C₁₀-Alkoxygruppen substituiert sein. Besonders bevorzugt handelt es sich bei dem C₁-C₃₀-Alkylrest um einen linearen oder verzweigten Alkylrest, der 1 bis 30, vorzugsweise 1 bis 20, besonders bevorzugt 1 bis 18, ganz besonders bevorzugt 1 bis 13, insbesondere 8 bis 13 Kohlenstoffatome umfasst.

Bei dem C₁-C₃₀-Alkylrest, bevorzugt C₁-C₂₀-, besonders bevorzugt C₁-C₁₈-, ganz besonders bevorzugt C₁-C₁₃-, insbesondere C₈-C₁₃-Alkylrest (Rest R in dem Cyclohexanpolycarbonsäurederivat der Formel (I)) kann es sich des Weiteren um Mischungen verschiedener Alkylreste handeln, die sich in der Zahl der Kohlenstoffatome und/oder in ihrem Verzweigungsgrad unterscheiden. Beispielsweise handelt es sich bei den nachstehend erwähnten iso-Nonyl-, iso-Decyl-, iso-Undecyl-, iso-Dodecyl- und iso-Tridecylresten um Mischungen von verschieden verzweigten Alkylresten, wie dem Fachmann bekannt ist. Grundsätzlich handelt es sich in diesem Fall um jeweils verschiedene Cyclohexanpolycarbonsäurederivate der Formel (I), die sich in ihren Alkylresten R unterscheiden, z.B. in der Anzahl der Kohlenstoffatome und/oder im Verzweigungsgrad der Alkylreste. Auch die n Reste R in einem Cyclohexanpolycarbonsäurederivat der Formel (I) können - für den Fall, dass n ≥ 2 ist - unterschiedlich (gemischte Ester) (oder gleich) sein.

R ist bevorzugt C₁-C₂₀-Alkyl, besonders bevorzugt C₁-C₁₈-Alkyl, ganz besonders bevorzugt C₁-C₂₀-Alkyl, insbesondere ganz besonders bevorzugt C₁-C₁₈-Alkyl, weiter insbesondere ganz besonders bevorzugt C₁-C₁₃-Alkyl und insbesondere C₈-C₁₃-Alkyl. Beispiele für derartige Alkylgruppen sind Methyl, Ethyl, n-Propyl, i-Propyl, n-Butyl, i-Butyl, sek.-Butyl, tert.-Butyl, n-Pentyl, n-Hexyl, n-Octyl, 2-Ethylhexyl, n-Nonyl, iso-Nonyl, n-Decyl, iso-Decyl, n-Undecyl, iso-Undecyl, n-Dodecyl, iso-Dodecyl, n-Tridecyl, iso-Tridecyl, Stearyl, und n-Eicosyl. Ganz besonders bevorzugte Alkylgruppen R sind 2-Ethylhexyl, iso-Nonyl und iso-Decyl.

Ganz besonders bevorzugt ist n 2.

Wenn m 2 oder 3 ist, können die Reste R¹ gleich oder verschieden sein. Die C₁-C₁₀-Alkylgruppen bzw. die C₁-C₃₀-Alkylgruppen können geradkettig oder verzweigt sein. Wenn R¹ für eine Alkylgruppe steht, handelt es sich bevorzugt um eine C₁-C₈-Alkylgruppe, besonders bevorzugt um eine C₁-C₆-Alkylgruppe. Beispiele für derartige Alkylgruppen sind Methyl, Ethyl, n-Propyl, i-Propyl, n-Butyl, i-Butyl, sek.-Butyl, tert.-Butyl, n-Pentyl, n-Hexyl, n-Octyl und 2-Ethylhexyl.

Ganz besonders bevorzugt ist m 0.

Bevorzugt ist das mindestens eine Cyclohexanpolycarbonsäurederivat ausgewählt aus der Gruppe bestehend aus kernhydrierten Mono- und Dialkylestern der Phthalsäure, Isophthalsäure und Terephthalsäure, kernhydrierten Mono-, Di- und Trialkylestern der Trimellitsäure, der Trimesinsäure und der Hemimellitsäure oder Mono-, Di-, Tri- und Tetraalkylestern der Pyrromellitsäure, wobei die Alkylgruppen linear oder verzweigt sein können und jeweils 1 bis 30, bevorzugt 2 bis 10, besonders bevorzugt 3 bis 18 Kohlenstoffatome aufweisen, und Gemischen aus zwei oder mehr davon.

Geeignete Cyclohexanpolycarbonsäurederivate sind z.B. in WO99/32427 offenbart.

Besonders bevorzugt sind Cyclohexan-1,2-dicarbonsäurealkylester, Cyclohexan-1,4-dicarbonsäurealkylester und Cyclohexan-1,2-dicarbonsäurealkylester, d.h. n in Formel (I) ist ganz besonders bevorzugt 2 und die 2 Gruppen COOR sind in ortho-, meta- oder para-Position zueinander angeordnet. Geeignete Reste R sind vorstehend genannt.

Geeignete Cyclohexanpolycarbonsäurederivate sind insbesondere die in WO 99/32427 offenbarten, im Folgenden nochmals aufgelisteten Cyclohexan-1,2-dicarbonsäureester:
Gemischte Ester der Cyclohexan-1,2-dicarbonsäure mit C1- bis C13-Alkoholen;
Cyclohexan-1,2-dicarbonsäuredi(isopentyl)ester, erhältlich durch Hydrierung von Di(isopentyl)phthalat mit der Chemical Abstracts Registry Nummer (im Folgenden: CAS Nr.) 84777-06-0;
Cyclohexan-1,2-dicarbonsäuredi(isoheptyl)ester, erhältlich durch Hydrierung von Di(isoheptyl)phthalat mit der CAS Nr. 71888-89-6;
Cyclohexan-1,2-dicarbonsäuredi(isononyl)ester, erhältlich durch Hydrierung eines Di(isononyl)phthalats mit der CAS Nr. 68515-48-0;
Cyclohexan-1,2-dicarbonsäuredi(isononyl)ester, erhältlich durch Hydrierung eines Di(isononyl)phthalats mit der CAS Nr. 28553-12-0, basierend auf n-Buten;
Cyclohexan-1,2-dicarbonsäuredi(isononyl)ester, erhältlich durch Hydrierung eines Di(isononyl)phthalats mit der CAS Nr. 28553-12-0 basierend auf Isobuten;
ein 1,2-Di-C9-Ester der Cyclohexandicarbonsäure, erhältlich durch Hydrierung eines Di(nonyl)phthalats mit der CAS Nr. 68515-46-8;
ein Cyclohexan-1,2-dicarbonsäuredi(isodecyl)ester erhältlich durch Hydrierung eines Di(isodecyl)phthalats mit der CAS Nr. 68515-49-1;
ein 1,2-Di-C7-11-Ester der Cyclohexandicarbonsäure, erhältlich durch Hydrierung des entsprechenden Phthalsäureesters mit der CAS Nr. 68515-42-4;
ein 1,2-Di-C7-11-Ester der Cyclohexandicarbonsäure, erhältlich durch Hydrierung der Di-C7-11-Phthalate mit folgenden CAS Nr.
111 381-89-6,
   111 381 90-9,
   111 381 91-0,
   68515-44-6,
   68515-45-7 und
   3648-20-2;
ein 1,2-Di-C9-11-Ester der Cyclohexandicarbonsäure, erhältlich durch Hydrierung eines Di-C9-11-Phthalats mit der CAS Nr. 98515-43-6;
ein 1,2-Di(isodecyl)cyclohexandicarbonsäureester, erhältlich durch Hydrierung eines Di(isodecyl)phthalats, das hauptsächlich aus Di-(2-propylheptyl)phthalat besteht;
ein 1,2-Di-C7-9-Cyclohexandicarbonsäureester, erhältlich durch Hydrierung des entsprechenden Phthalsäureesters der verzweigtkettige oder lineare C7-9-Alkylestergruppen aufweist; entsprechende beispielsweise als Ausgangsprodukte verwendbare Phthalate haben die folgende CAS Nr.:
Di-C7,9-Alkylphthalat mit der CAS Nr. 111 381-89-6;
Di-C7-Alkylphthalat mit der CAS Nr. 68515-44-6; und
Di-C9-Alkylphthalat mit der CAS Nr. 68515-45-7.

Der Inhalt der WO 99/32427 bezieht sich u. a. auf diese soeben aufgelisteten Verbindungen und die Herstellung von Benzolpolycarbonsäuren unter Verwendung spezieller Makroporen aufweisender Katalysatoren.

Als Cyclohexanpolycarbonsäurederivate der Formel (I) sind auch Hydrierprodukte von Phthalsäure-Mischestern mit C10- und C13-Alkoholen geeignet, wie sie in der DE-A 10032580.7 beschrieben sind.

Des weiteren sind auch die Hydrierungsprodukte der kommerziell erhältlichen Benzolcarbonsäureester mit den Handelsnamen Jayflex DINP (CAS Nr. 68515-48-0), Jayflex DIDP (CAS Nr. 68515-49-1), Palatinol 9-P, Vestinol 9 (CAS Nr. 28553-12-0), TOTM-I (CAS Nr. 3319-31-1), Linplast 68-TM, Palatinol N (CAS Nr. 28553-12-0), Jayflex DHP (CAS Nr. 68515-50-4), Jayflex DIOP (CAS Nr. 27554-26-3), Jayflex UDP (CAS Nr. 68515-47-9), Jayflex DIUP (CAS Nr. 85507-79-5), Jayflex DTDP (CAS Nr. 68515-47-9), Jayflex L9P (CAS Nr. 68515-45-7), Jayflex L911 P (CAS Nr. 68515-43-5), Jayflex L11P (CAS Nr. 3648-20-2), Witamol 110 (CAS Nr. 90193-91-2), Witamol 118 (Di-n-C8-C10-alkylphthalat), Unimoll BB (CAS Nr. 85-68-7), Linplast 1012 BP (CAS Nr. 90193-92-3), Linplast 13 XP (CAS Nr. 27253-26-5), Linplast 610 P (CAS Nr. 68515-51-5), Linplast 68 FP (CAS Nr. 68648-93-1) und Linplast 812 HP (CAS Nr. 70693-30-0), Palatinol AH (CAS Nr. 117-81-7), Palatinol 711 (CAS Nr. 68515-42-4), Palatinol 911 (CAS Nr. 68515-43-5), Palatinol 11 (CAS Nr. 3648-20-2), Palatinol Z (CAS Nr. 26761-40-0) und Palatinol DIPP (CAS Nr. 84777-06-0) als geeignet im Sinne der vorliegenden Erfindung zu bewerten.

Für die erfindungsgemäßen Zusammensetzungen besonders geeignete Cyclohexanpolycarbonsäurederivate sind 1,2-Cyclohexandicarbonsäureester ausgewählt aus der Gruppe bestehend aus 1,2-Diisobutylcyclohexandicarbonsäureester, 1,2-Di-(2-ethylhexyl)-cyclohexandicarbonsäureester, 1,2-Diisononylcyclohexandicarbonsäureester und 1,2-Diisodecylcyclohexandicarbonsäureester, ganz besonders bevorzugt sind 1,2-Di-(2-ethylhexyl)-cyclohexandicarbonsäureester und 1,2-Diisononylcyclohexandicarbonsäureester und insbesondere ganz besonders bevorzugt ist 1,2-Diisononylcyclohexandicarbonsäureester. Beispielsweise kann es sich um 1,2-Diisononylcyclohexandicarbonsäureester (Di-isononyl-cyclohexan-1,2-dicarboxylat) handeln, welches unter dem Namen Hexamoll^{®} DINCH auch kommerziell erhältlich ist (Fa. BASF SE).

Die Herstellung der Cyclohexanpolycarbonsäurederivate erfolgt bevorzugt gemäß dem in WO 99/32427 offenbarten Verfahren. Dieses Verfahren umfasst die Hydrierung einer Benzolpolycarbonsäure oder eines Derivats davon oder eines Gemisches aus zwei oder mehr davon durch Inkontaktbringen der Benzolpolycarbonsäure oder des Derivats davon oder des Gemischs aus zwei oder mehr davon mit einem Wasserstoff enthaltenden Gas in Gegenwart eines Katalysators der als Aktivmetall mindestens ein Metall der VIII. Nebengruppe des Periodensystems allein oder zusammen mit mindestens einem Metall der I. oder VII. Nebengruppe des Periodensystems, aufgebracht auf einem Träger, umfasst, wobei der Träger Makroporen aufweist.

Die Hydrierung der Benzolpolycarbonsäure oder eines Derivats davon oder eines Gemisches aus zwei oder mehr davon wird im allgemeinen bei einer Temperatur von 50 bis 250°C, vorzugsweise 70 bis 220°C, besonders bevorzugt 80 bis 170°C durchgeführt. Die dabei verwendeten Drücke liegen in der Regel bei ≥10 bar, vorzugsweise 20 bis 300 bar.

Das erfindungsgemäße Verfahren kann entweder kontinuierlich oder diskontinuierlich durchgeführt werden, wobei die kontinuierliche Verfahrensdurchführung bevorzugt ist.

Bei der kontinuierlichen Verfahrensführung beträgt die Menge der (des) zur Hydrierung vorgesehenen Benzolpolycarbonsäure(ester(s) bzw. des Gemischs aus zwei oder mehr davon vorzugsweise 0,05 bis 3 kg pro Liter Katalysator pro Stunde, weiter bevorzugt 0,1 bis 1 kg pro Liter Katalysator pro Stunde.

Als Hydriergase können beliebige Gase verwendet werden, die freien Wasserstoff enthalten und keine schädlichen Mengen an Katalysatorgiften, wie beispielsweise CO, aufweisen. Beispielsweise können Reformerabgase verwendet werden. Vorzugsweise wird reiner Wasserstoff als Hydriergas verwendet.

Die Hydrierung kann in Ab- oder Anwesenheit eines Lösungs- oder Verdünnungsmittels durchgeführt werden, d. h. es ist nicht erforderlich, die Hydrierung in Lösung durchzuführen. Die Hydrierung kann z.B. auch in der Gasphase durchgeführt werden.

Vorzugsweise wird jedoch ein Lösungs- oder Verdünnungsmittel eingesetzt. Als Lösungs- oder Verdünnungsmittel kann jedes geeignete Lösungsmittel- oder Verdünnungsmittel eingesetzt werden. Die Auswahl ist dabei nicht kritisch, solange das eingesetzte Lösungs- oder Verdünnungsmittel in der Lage ist, mit der (dem) zu hydrierenden Benzoldicarbonsäure(ester) eine homogene Lösung zu bilden. Beispielsweise können die Lösungs- oder Verdünnungsmittel auch Wasser enthalten.

Beispiele geeigneter Lösungs- oder Verdünnungsmittel schließen die folgenden ein: Geradkettige oder cyclische Ether, wie beispielsweise Tetrahydrofuran oder Dioxan, sowie aliphatische Alkohole, in denen der Alkylrest vorzugsweise 1 bis 10 Kohlenstoffatome, insbesondere 3 bis 6 Kohlenstoffatome aufweist. Beispiele bevorzugt verwendbarer Alkohole sind i-Propanol, n-Butanol, i-Butanol und n-Hexanol. Gemische dieser oder anderer Lösungs- oder Verdünnungsmittel können ebenfalls verwendet werden.

Die Menge des eingesetzten Lösungs- oder Verdünnungsmittels ist nicht in besonderer Weise beschränkt und kann je nach Bedarf frei gewählt werden, wobei jedoch solche Mengen bevorzugt sind, die zu einer 10 bis 70 gew.-%-igen Lösung der (des) zur Hydrierung vorgesehenen Benzoldicarbonsäure(esters) führen. Besonders bevorzugt wird das bei der Hydrierung gebildete Produkt, also das entsprechende Cyclohexanderivat als Lösungsmittel eingesetzt, gegebenenfalls neben anderen Lösungs- oder Verdünnungsmitteln. In jedem Fall kann ein Teil des im Verfahren gebildeten Produkts der noch zu hydrierenden Benzolpolycarbonsäure oder des Derivats davon beigemischt werden. Bezogen auf das Gewicht der zur Hydrierung vorgesehenen Verbindung wird vorzugsweise die 1-bis 30-fache, besonders bevorzugt die 5-bis 20-fache, insbesondere die 5-bis 10-fache Menge des Umsetzungsproduktes als Lösungsoder Verdünnungsmittel zugemischt.

In einer bevorzugten Ausführungsform werden die in den erfindungsgemäßen Zusammensetzungen eingesetzten Cyclohexanpolycarbonsäurederivate gemäß dem folgenden Verfahren hergestellt:
Veresterung einer Benzolpolycarbonsäure der Formel II 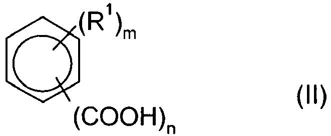 worin
   - R¹: C₁-C₁₀-Alkyl oder C₃-C₈-Cycloalkyl bedeutet,
   - m: 0, 1, 2 oder 3 bedeutet, und
   - n: 2,3 oder 4 bedeutet,
mit einem oder mehreren Alkoholen der Formel

   R-OH

   worin
   - R: C₁-C₃₀-Alkyl, bevorzugt C₁-C₂₀-Alkyl, besonders bevorzugt C₁-C₁₈-Alkyl, ganz besonders bevorzugt C₁-C₁₃-Alkyl, insbesondere C₈-C₁₃-Alkyl bedeutet,
wobei ein Benzolpolycarbonsäureester der Formel III erhalten wird 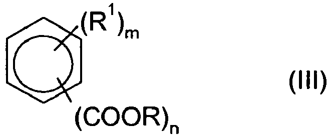
b) Hydrierung des Benzolpolycarbonsäureesters der Formel III zu einem entsprechenden Cyclohexanpolycarbonsäureester.

Bevorzugte Ausführungsformen von R¹, m, n und R sind vorstehend bezüglich der Cyclohexanpolycarbonsäureester gemäß Formel I erwähnt.

Eine bevorzugte Ausführungsform der Hydrierung des Benzolpolycarbonsäureesters der Formel III (Schritt b)) ist vorstehend erwähnt und des Weiteren in dem vorstehend erwähnten Dokument WO 99/32427 beschrieben.

Bevorzugt eingesetzte Benzolpolycarbonsäuren sind Phthalsäure, Isophthalsäure, Terephthalsäure, Trimellitsäure, Trimesinsäure, Hemimellitsäure und Pyromellitsäure. Ganz besonders bevorzugt wird Phthalsäure eingesetzt. Die vorstehend genannten Säuren sind kommerziell erhältlich.

Als Alkohole werden bevorzugt die den Resten R der Cyclohexanpolycarbonsäurederivate der Formel I entsprechenden Alkohole eingesetzt. Bevorzugt werden somit lineare oder verzweigte Alkohole mit C₁-C₁₃-Alkylresten, besonders bevorzugt mit C₈-C₁₃-Alkylresten, eingesetzt. Bei den zur Veresterung mit den Benzolpolycarbonsäuren eingesetzten Alkoholen R-OH kann es sich jeweils um die den vorstehend genannten Resten R entsprechenden einzelnen Isomere der Alkohole oder um Gemische verschiedener Alkohole mit isomeren Alkylresten mit derselben Zahl von Kohlenstoffatomen handeln und/oder um Gemische verschiedener Alkohole mit unterschiedlicher Zahl der Kohlenstoffatome.

Die zur Umsetzung mit den Benzolpolycarbonsäuren geeigneten Alkohole oder Alkoholgemische können nach allen dem Fachmann bekannten Verfahren hergestellt werden. Geeignete Verfahren zur Herstellung von Alkoholen oder Verfahrensschritte, die bei der Herstellung von Alkoholen angewendet werden, sind zum Beispiel:
- Hydroformylierung mit anschließender Hydrierung der gebildeten Aldehyde, zum Beispiel wie in WO 92/13818, DE-A 2 009 505, DE-A 199 24 339, EP-A 1 113 034, WO 00/63151, WO 99/25668, JP-A 1 160 928, JP-A 03 083 935, JP-A 2000/053803, EP-A 0 278 407, EP-A 1 178 029, FR-A 1 304 144, JP-A 30 44 340, JP-A 30 44 341, JP-A 30 44 342, JP-A 0 40 36 251, GB-A 721,540, DE-A 195 304 14, JP-A 2001/049029, US 2,781,396, US 3,094,564, FR-A 1 324 873, JP-A 0 816 9854, US 3,153,673, US 3,127,451, US 1,828,344, WO 2003/66642, WO 2003/18912, EP-A 0 424 767, WO 2002/68369, EP-A 0 366 089, JP-A 2001/002829, DE-A 100 35 617, DE-A 199 55 593, WO 2002/00580, EP-A 0 643 031, US 2,876,264, JP-A 2000/319444 und DE-A 100 32 580 offenbart;
- Hydrierung von Aldolprodukten, zum Beispiel wie in DE-A 102 51 311, JP-A 05 194 761, US 3,272, 873, DE-A 3 151 086, JP-A 2001/322959, WO 98/03462 und EP-A 0 603 630 offenbart;
- Hydratisierung von Alkenen, zum Beispiel wie in US 5,136,108, EP-A 0 325 144, EP-A 0 325 143, DE-A 100 50 627, US 4,982,022, GB-A 2,187,741, DE-A 36 28 008, US 3,277,191, JP-A 2000/191 566, DE-A 854 377, DE-A 38 01 275, DE-A 39 25 217, JP-A 06 321 828, JP-A 02 088 536, JP-A 06 287 156, JP-A 06 287 155, JP-A 54 141 712, JP-A 08 283 186, JP-A 09 263 558 und US 4,684,751 offenbart;
- Hydrierung von Carbonsäuren und Carbonsäureestern, insbesondere Fettsäuren und Fettsäureestern, zum Beispiel wie in US 5,463,143, US 5,475,159, WO 94/10112, CA 2,314,690, WO 94/06738, JP-A 06 065 125 und US 3,361,832 offenbart;
- Hydrierung von ungesättigten Alkoholen oder von Carbonylverbindungen, zum Beispiel wie in EP-A 0 394 842, DE-A 1 269 605, WO 88/05767, FR-A 1,595,013, EP-A 0 326 674, BE-A 756 877, BE-A 757 561, DE-A 1 277 232, FR-A 1,499,041 und DE-A 1 276 620 offenbart;
- Hydrierung von Epoxiden, zum Beispiel wie in FR-A 1,508,939, GB-A 879 803 und DE-A 1 078 106 offenbart;
- Verfahren umfassend einen Telomerisationsschritt, zum Beispiel wie in EP-A 0 330 999, DE-A 1 138 751, US 5,908,807, NE-6,603,884 und US 3,091,628 offenbart;
- Verfahren umfassend einen Isomerisierungsschritt, zum Beispiel wie in DE-A 42 28 887 offenbart;
- Hydrolyse von Sulfaten, zum Beispiel wie in GB-A 1,165,309 offenbart;
- Umsetzung von Dienen mit Aminen, zum Beispiel wie in DE-A 44 31 528 offenbart;
- Enzymatische Herstellung von Alkoholen, zum Beispiel wie in WO 93/24644 offenbart;
- Selektive Hydrierung von Dienen, zum Beispiel wie in US 3,203,998, DE-A 21 41 186, GB-A 2,093,025, JP-A 02 129 24, JP-A 1 122 8468, DE-A 195 44 133, WO 94/00410, GB-A 2,260,136, DE-A 44 10 746 und JP-A 08 176 036 offenbart;
- Herstellung von Alkoholen aus Nitrilen, zum Beispiel wie in EP-A 0 271 092 offenbart;
- Herstellung von Alkoholen durch Umsetzung von Alkinen, zum Beispiel wie in RU 205 9597-C1 offenbart; und
- Hydrogenolyse von substituierten Tetrahydropyranen, zum Beispiel wie in GB 1,320,188 offenbart.

Dem Fachmann sind weitere Verfahren zur Herstellung von Alkoholen bekannt, die ebenfalls zur Herstellung von zur Veresterung mit Benzolpolycarbonsäuren geeigneten Alkoholen oder Alkoholgemischen eingesetzt werden können. Bevorzugt eingesetzte Alkohole sind - wie vorstehend erwähnt - Alkohole, die C₁-C₁₃-Alkylreste, besonders bevorzugt C₈-C₁₃-Alkylreste, aufweisen. Insbesondere die längerkettigen C₈-C₁₃-Alkohole bzw. Alkoholgemische, die diese Alkohole enthalten, werden besonders bevorzugt durch katalytische Hydroformylierung (auch als Oxoreaktion bezeichnet) von Olefinen und anschließende Hydrierung der gebildeten Aldehyde hergestellt. Geeignete Hydroformylierungsverfahren sind dem Fachmann bekannt und sind in den vorstehend genannten Dokumenten offenbart. Die in den genannten Dokumenten offenbarten Alkohole und Alkoholgemische können mit den vorstehend genannten Benzolpolycarbonsäuren zu den gewünschten Benzolpolycarbonsäurealkylestern bzw. -estergemischen der Formel (I) umgesetzt werden.

C₅-Alkohole bzw. Gemische, die C₅-Alkohole, besonders bevorzugt n-Pentanol enthalten, können zum Beispiel durch Hydroformylierung von Butadien in Anwesenheit einer wässrigen Lösung einer Rhodiumverbindung und eines Phosphins als Katalysator hergestellt werden. Ein solches Verfahren ist zum Beispiel in EP-A 0 643 031 offenbart.

Geeignete C₇-Alkoholmischungen, die zur Veresterung mit den Benzolpolycarbonsäuren eingesetzt werden können, sind zum Beispiel in JP-A 2000/319 444 offenbart. Die Herstellung der C₇-Alkoholmischung erfolgt durch Hydroformylierung mit anschließender Hydrierung der gebildeten Aldehyde.

Mischungen enthaltend C₈-Alkohole und deren Herstellungsverfahren sind zum Beispiel in GB-A 721 540 offenbart, worin ein Verfahren zur Herstellung von Isooctylalkoholen ausgehend von Heptenen mittels Hydroformylierung und anschließender Hydrierung beschrieben wird. Weitere Dokumente, die die Herstellung von C₇-Alkoholen bzw. diese Alkohole enthaltenden Mischungen offenbaren, sind DE-A 195 30 414, JP-A 2001/49029, US 2,781,396, US 3,094,564, FR-A 1,324,873, JP-A 08 169 854, US 3,153,673, US 3,127,451 und US 1,828,344.

C₉-Alkohole bzw. Mischungen enthaltend C₉-Alkohole werden bevorzugt durch Dimerisierung von Butenen, Hydroformylierung der erhaltenen Octene und anschließende Hydrierung des erhaltenen C₉-Aldehyds hergestellt.

Geeignete Verfahren und C₉-Alkohle enthaltende Mischungen sind zum Beispiel in WO 92/13818, DE-A 20 09 505, DE-A 199 24 339, EP-A 1 113 034, WO 2000/63151, WO 99/25668, JP-A 1 160 928, JP-A 03 083 935, JP-A 2000/053803, EP-A 0 278 407 und EP-A 1 178 029 offenbart.

C₁₀-Alkohole und Mischungen enthaltend diese Alkohole sind zum Beispiel in WO 2003/66642, WO 2003/18912, EP-A 0 424 767, WO 2002/68369, EP-A 0 366 089 und JP-A 2001/002829 offenbart.

C₁₂-Alkohole bzw. Mischungen enthaltend C₁₂-Alkohole, insbesondere Trimethylnonanol, und ein Verfahren zu dessen Herstellung ist zum Beispiel in WO 98/03462 offenbart.

C₁₃-Alkohole sowie Mischungen enthaltend diese Alkohole sind zum Beispiel in DE-A 100 32 580, DE-A 199 55 593 und WO 2002/00580 offenbart.

Handelt es sich bei den Alkylresten R der Cyclohexanpolycarbonsäureester um C₁-bis C₄-Alkylreste, so werden diese durch Umsetzung der Benzolpolycarbonsäuren der Formel II mit Methanol, Ethanol, n-Propanol, iso-Propanol, n-Butanol, iso-Butanol, sek.-Butanol oder tert.-Butanol erhalten. Dabei können zur Herstellung von Benzolpolycarbonsäureestern, worin R 3 oder 4 ist, jeweils Gemische der genannten Propanole oder Butanole eingesetzt werden oder einzelne Isomere. Bevorzugt werden einzelne Isomere des Propanols oder Butanols eingesetzt. Die Herstellung der vorstehend genannten C₁- bis C₄-Alkohole ist dem Fachmann bekannt.

Handelt es sich bei den Alkylresten R der Cyclohexanpolycarbonsäureester um C₅- bis C₁₃-Alkylreste, bevorzugt C₈-C₁₃-Alkylreste, werden bevorzugt C₅- bis C₁₃-Alkohole, besonders bevorzugt C₈-C₁₃-Alkohole, insbesondere bevorzugt C₈-, C₉- und/oder C₁₀-Alkohole eingesetzt, die Verzweigungsgrade (ISO-Index) von im Allgemeinen 0,1 bis 4, bevorzugt 0,5 bis 3, besonders bevorzugt 0,8 bis 2 und insbesondere bei 1 bis 1,5 aufweisen, d.h. im Allgemeinen handelt es sich bei den jeweiligen Alkoholen um Gemische verschiedener Isomere.

Der ISO-Index ist eine dimensionslose Größe, die mittels Gaschromatographie bestimmt wurde.
Methode: Kapillar GC
Apparatur: Kapillar Gaschromatograph mit Autosampier, Split/Splitless-Injektionssystem und Flammenionisationsdetektor (FID)
Chemikalien: - MSTFA (N-Methyl-N-trimethylsilyltrifluoracetamid) - Vergleiche zur Bestimmung der Retentionszeiten

Probenvorbereitung: 3 Tropfen der Probe werden in 1 ml MSTFA und für 60 Minuten bei 80°C gehalten

### GC Bedingungen: Kapillarsäule: Ultra-1

- Länge: 50 m
- Innendurchmesser: 0,25 mm
- Filmdicke: 0,1 Mikrometer

| | |
|---|---|
| Trägergas: | Helium |
| Säulenvordruck: | 200 psi constant |
| Split: | 80 ml/min |
| Septumspülung: | 3 ml/min |
| Ofentemperatur: | 120°C, 25 min isotherm |
| Injektortemperatur: | 250°C |
| Detektortemperatur: | 250°C (FID) |
| Injektionsvolumen: | 0,5 Mikroliter |

### Berechnung Die Vorgehensweise bei der Berechnung des Isoindex wird in der folgenden Tabelle ersichtlich:

| Komponente | Name | Verzweigung | Anteil in Fl.% | Index |
|---|---|---|---|---|
| 1 | 2-Ethyl-2-methylhexanol-1 | 2 | 1,00 | 0,0200 |
| 2 | 2-Ethyl-4-methylhexanol-1 | 2 | 1,00 | 0,0200 |
| 3 | 2-Ethyl-4-methylhexanol-1 | 2 | 1,00 | 0,0200 |
| 4 | 2-Propyl-3-methylpentanol-1 | 2 | 1,00 | 0,0200 |
| 5 | 2-Propyl-hexanol-1 | 1 | 1,00 | 0,0100 |
| 6 | 2,5-Dimethylheptanol-1 | 2 | 1,00 | 0,0200 |
| 7 | 2,3-Dimethylheptanol-1 | 2 | 1,00 | 0,0200 |
| 8 | 2,3,4-Trimethylhexanol-1 | 3 | 1,00 | 0,0300 |
| 9 | 2-Ethylheptanol-1 | 1 | 1,00 | 0,0100 |
| 10 | 3-Ethyl-4-methylhexanol-1 | 2 | 82,00 | 1,6400 |
| 11 | 3-Ethylheptanol-1 | 1 | 1,00 | 0,0100 |
| 12 | 2-Methyloktanol-1 | 1 | 1,00 | 0,0100 |
| 13 | 4,5-Dimethylheptanol-1 | 2 | 1,00 | 0,0200 |
| 14 | 4,5-Dimethylheptanol-1 | 2 | 1,00 | 0,0200 |
| 15 | 4-Methyloktanol-1 | 1 | 1,00 | 0,0100 |
| 15a | 7-Methyloktanol-1 | 1 | 1,00 | 0,0000 |
| 16 | 6-Methyloktanol-1 | 1 | 1,00 | 0,0100 |
| 17 | Nonanol-1 | 0 | 1,00 | 0,0000 |
| | | Summe: | 99,00 | 1,9000 |
| | Unbekannte Komponente | 2 | 1,00 | 0,0200 |
| | | | Isoindex: | 1,9200 |

Der Isoindex berechnet sich somit aus dem Verzweigungsgrad der in dem Alkoholgemisch enthaltenen Komponenten und der Menge der entsprechenden Komponenten (ermittelt mittels Gaschromatographie).

Die C₅- bis C₁₃-Alkohole, bevorzugt C₈-C₁₃-Alkohole, werden gemäß den vorstehend genannten Verfahren hergestellt. Zur Herstellung von Cyclohexanpolycarbonsäureestern, worin R C₉-Alkyl ist, die ganz besonders bevorzugt in den erfindungsgemäßen Zusammensetzungen eingesetzt werden, wird besonders bevorzugt ein Nonanol-Gemisch eingesetzt, worin 1 bis 20 Gew.-%, bevorzugt 3 bis 18 Gew.-%, besonders bevorzugt 5 bis 16 Gew.-% des Nonanol-Gemisches keine Verzweigung aufweisen, 10 bis 90 Gew.-%, bevorzugt 15 bis 80 Gew.-%, besonders bevorzugt 20 bis 70 Gew.-%, eine Verzweigung, 5 bis 40 Gew.-%, bevorzugt 10 bis 35 Gew.-%, besonders bevorzugt 15 bis 30 Gew.-% zwei Verzweigungen, 0,1 bis 10 Gew.-%, bevorzugt 0,1 bis 8 Gew.-%, besonders bevorzugt 0,1 bis 5 Gew.-% drei Verzweigungen aufweisen und 0 bis 4 Gew.-%, bevorzugt 0 bis 3 Gew.-%, besonders bevorzugt 0,1 bis 2 Gew.-%. sonstige Komponenten sind. Unter sonstigen Komponenten sind im Allgemeinen Nonanole mit mehr als drei Verzweigungen, Decanole oder Octanole zu verstehen. Wobei die Summe der genannten Komponenten 100 Gew.-% ergibt.

Eine besonders bevorzugte Ausführungsform eines Nonanol-Gemisches, das zur Herstellung von bevorzugt verwendeten Cyclohexanpolycarbonsäurederivaten eingesetzt wird, weist die folgende Zusammensetzung auf:
- 1,73 bis 3,73 Gew.-%, bevorzugt 1,93 bis 3,53 Gew.-%, besonders bevorzugt 2,23 bis 3,23 Gew.-% 3-Ethyl-6-methyl-hexanol;
- 0,38 bis 1,38 Gew.-%, bevorzugt 0,48 bis 1,28 Gew.-%, besonders bevorzugt 0,58 bis 1,18 Gew.-% 2,6 Dimethylheptanol;
- 2,78 bis 4,78 Gew.-%, bevorzugt 2,98 bis 4,58 Gew.-%, besonders bevorzugt 3,28 bis 4,28 Gew.-% 3,5-Dimethylheptanol;
- 6,30 bis 16,30 Gew.-%, bevorzugt 7,30 bis 15,30 Gew.-%, besonders bevorzugt 8,30 bis 14,30 Gew.-% 3,6-Dimethylheptanol;5,74 bis 11,74 Gew.-%, bevorzugt 6,24 bis 11,24 Gew.-%, besonders bevorzugt 6,74 bis 10,74 Gew.-% 4,6-Dimethylheptanol;
- 1,64 bis 3,64 Gew.-%, bevorzugt 1,84 bis 3,44 Gew.-%, besonders bevorzugt 2,14 bis 3,14 Gew.-% 3,4,5-Trimethylhexanol;
- 1,47 bis 5,47 Gew.-%, bevorzugt 1,97 bis 4,97 Gew.-%, besonders bevorzugt 2,47 bis 4,47 Gew.-% 3,4,5-Trimethylhexanol, 3-Methyl-4-ethylhexanol und 3-Ethyl-4-methylhexanol;
- 4,00 bis 10,00 Gew.-%, bevorzugt 4,50 bis 9,50 Gew.-%, besonders bevorzugt 5,00 bis 9,00 Gew.-% 3,4-Dimethylheptanol;
- 0,99 bis 2,99 Gew.-%, bevorzugt 1,19 bis 2,79 Gew.-%, besonders bevorzugt 1,49 bis 2,49 Gew.-% 4-Ethyl-5-methylhexanol und 3-Ethylheptanol;
- 2,45 bis 8,45 Gew.-%, bevorzugt 2,95 bis 7,95 Gew.-%, besonders bevorzugt 3,45 bis 7,45 Gew.-% 4,5-Dimethylheptanol und 3-Methyloctanol;
- 1,21 bis 5,21 Gew.-%, bevorzugt 1,71 bis 4,71 Gew.-%, besonders bevorzugt 2,21 bis 4,21 Gew.-% 4,5-Dimethylheptanol;
- 1,55 bis 5,55 Gew.-%, bevorzugt 2,05 bis 5,05 Gew.-%, besonders bevorzugt 2,55 bis 4,55 Gew.-% 5,6-Dimethylheptanol;
- 1,63 bis 3,63 Gew.-%, bevorzugt 1,83 bis 3,43 Gew.-%, besonders bevorzugt 2,13 bis 3,13 Gew.-% 4-Methyloctanol;
- 0,98 bis 2,98 Gew.-%, bevorzugt 1,18 bis 2,78 Gew.-%, besonders bevorzugt 1,48 bis 2,48 Gew.-% 5-Methyloctaonol;
- 0,70 bis 2,70 Gew.-%, bevorzugt 0,90 bis 2,50 Gew.-%, besonders bevorzugt 1,20 bis 2,20 Gew.-% 3,6,6-Trimethylhexanol;
- 1,96 bis 3,96 Gew.-%, bevorzugt 2,16 bis 3,76 Gew.-%, besonders bevorzugt 2,46 bis 3,46 Gew.-% 7-Methyloctanol;
- 1,24 bis 3,24 Gew.-%, bevorzugt 1,44 bis 3,04 Gew.-%, besonders bevorzugt 1,74 bis 2,74 Gew.-% 6-Methyloctanol;
- 25 bis 35 Gew.-%. bevorzugt 28 bis 33 Gew.-%, besonders bevorzugt 29 bis 32 Gew.-% sonstige Alkohole mit 9 und 10 Kohlenstoffatomen;
wobei die Gesamtsumme der genannten Komponenten 100 Gew.-% ergibt.

Eine weitere besonders bevorzugte Ausführungsform eines Nonanol-Gemisches, das zur Herstellung von bevorzugt verwendeten Cyclohexanpolycarbonsäurederivaten eingesetzt wird, weist die folgende Zusammensetzung auf:
- 6,0 bis 16,0 Gew.-%, bevorzugt 7,0 bis 15,0 Gew.-%, besonders bevorzugt 8,0 bis 14,0 Gew.-% n-Nonanol;
- 12,8 bis 28,8 Gew.-%, bevorzugt 14,8 bis 26,8 Gew.-%, besonders bevorzugt 15,8 bis 25,8 Gew.-% 6-Methyloctanol;
- 12,5 bis 28,8 Gew.-%, bevorzugt 14,5 bis 26,5 Gew.-%, besonders bevorzugt 15,5 bis 25,5 Gew.-% 4-Methyloctanol;
- 3,3 bis 7,3 Gew.-%, bevorzugt 3,8 bis 6,8 Gew.-%, besonders bevorzugt 4,3 bis 6,3 Gew.-% 2-Methyloctanol;
- 5,7 bis 11,7 Gew.-%, bevorzugt 6,3 bis 11,3 Gew.-%, besonders bevorzugt 6,7 bis 10,7 Gew.-% 3-Ethylheptanol;
- 1,9 bis 3,9 Gew.-%, bevorzugt 2,1 bis 3,7 Gew.-%, besonders bevorzugt 2,4 bis 3,4 Gew.-% 2-Ethylheptanol;
- 1,7 bis 3,7 Gew.-%, bevorzugt 1,9 bis 3,5 Gew.-%, besonders bevorzugt 2,2 bis 3,2 Gew.-% 2-Propylhexanol;
- 3,2 bis 9,2 Gew.-%, bevorzugt 3,7 bis 8,7 Gew.-%, besonders bevorzugt 4,2 bis 8,2 Gew.-% 3,5-Dimethylheptanol;
- 6,0 bis 16,0 Gew.-%, bevorzugt 7,0 bis 15,0 Gew.-%, besonders bevorzugt 8,0 bis 14,0 Gew.-% 2,5-Dimethylheptanol;
- 1,8 bis 3,8 Gew.-%, bevorzugt 2,0 bis 3,6 Gew.-%, besonders bevorzugt 2,3 bis 3,3 Gew.-% 2,3-Dimethylheptanol;
- 0,6 bis 2,6 Gew.-%, bevorzugt 0,8 bis 2,4 Gew.-%, besonders bevorzugt 1,1 bis 2,1 Gew.-% 3-Ethyl-4-methylhexanol;
- 2,0 bis 4,0 Gew.-%, bevorzugt 2,2 bis 3,8 Gew.-%, besonders bevorzugt 2,5 bis 3,5 Gew.-% 2-Ethyl-4-methylhexanol;
- 0,5 bis 6,5 Gew.-%, bevorzugt 1,5 bis 6 Gew.-%, besonders bevorzugt 1,5 bis 5,5 Gew.-% sonstige Alkohole mit 9 Kohlenstoffatomen;
wobei die Gesamtsumme der genannten Komponenten 100 Gew.-% ergibt.

Ganz besonders bevorzugte Cyclohexanpolycarbonsäurederivate sind somit 1,2-Diisononylcyclohexandicarbonsäureester. Der iso-Nonylrest in den 1,2-Diisononylcyclohexandicarbonsäureestern basiert bevorzugt auf den vorstehend genannten zur Herstellung der 1,2-DÜsononylcyclohexandicarbonsäureester eingesetzten Nonanolen. Beispielsweise kann es sich um 1,2-Diisononylcyclohexandicarbonsäureester (Di-isononyl-cyclohexan-1,2-dicarboxylat) handeln, welches unter dem Namen Hexamoll^{®} DINCH auch kommerziell erhältlich ist (Fa. BASF SE).

### Weitere Polymere, Zusatzstoffe und/oder Füll- bzw. Verstärkungsstoffe (Komponenten (III), (IV) und (V)

Die erfindungsgemäßen Zusammensetzungen können neben den Komponenten I und II als weitere Polymere (Komponente (III)) insbesondere teilkristalline Polyamide, teilaromatische Copolyamide, Polyester, Polyoxyalkylene, Polycarbonate, Polyarylensulfiden, Polyetherketone und/oder Polyvinylchloride enthalten. Bevorzugte weitere Polymere (Komponente (III)) sind Polycarbonat und Polyamid. Es können auch Mischungen aus zwei oder mehr der genannten Polymeren (Komponente (III)) eingesetzt werden. Die weiteren Polymere (Komponente (III)) sind in der Regel in Mengen von 0 bis 50 Gew.-%, bevorzugt 0-20 Gew.-%, besonders bevorzugt 0,05-15 Gew.-%, jeweils bezogen auf das Gesamtgewicht der Komponenten I und II, enthalten.

Neben den Komponenten I und II können in den erfindungsgemäßen Zusammensetzungen kunststoffübliche und dem Fachmann bekannte Zusatzstoffe (Komponente (IV)) in Mengen von 0 bis 50 Gew.-%, bevorzugt 0-40 Gew.-%, besonders bevorzugt 0,05-30 Gew.-%, jeweils bezogen auf das Gesamtgewicht der Komponenten I und II, enthalten sein. Als übliche Zusatzstoffe IV kommen alle Substanzen in Betracht, die sich in den Komponenten I und/oder II gut lösen, beziehungsweise mit diesen gut mischbar sind. Geeignete Zusatzstoffe (Komponente (IV)) sind u.a. Farbstoffe, Stabilisatoren, Schmiermittel, Wachse und Antistatika.

Ferner können in den erfindungsgemäßen Formmassen teilchen- oder faserförmige Füll- bzw. Verstärkungsstoffe (Komponente (V)), insbesondere Glasfasern und Calciumcarbonat , enthalten sein, welche meist in Mengen von 0 bis 50 Gew.-%, bevorzugt 0-40 Gew.-%, besonders bevorzugt 0,05-30 Gew.-%, jeweils bezogen auf das Gesamtgewicht der Komponenten I und II, vorliegen.

### Herstellung der erfindungsgemäßen Zusammensetzungen

Die Herstellung der erfindungsgemäßen Zusammensetzungen aus den Komponenten I, II und gewünschtenfalls weiteren Polymeren (Komponente (III)), Zusatzstoffen (Komponente (IV)) und/oder Füll- bzw. Verstärkungsstoffen (Komponente (V)) kann nach jeder beliebigen Weise nach allen bekannten Methoden erfolgen. Vorzugsweise erfolgt jedoch das Abmischen der Komponenten durch Schmelzevermischung, beispielsweise gemeinsames Extrudieren, Kneten oder Verwalzen der Komponenten, z. B. bei Temperaturen im Bereich von 160 bis 400 °C, bevorzugt von 180 bis 280°C, wobei die Komponenten, in einer bevorzugten Ausführungsform, zuvor aus den bei den jeweiligen Herstellschritten erhaltenen Lösungen oder wässrigen Dispersionen/Emulsionen teilweise oder vollständig isoliert worden sind. Beispielsweise können die Pfropfcopolymerisate A der Komponente I als feuchte Krümel mit einem Granulat des thermoplastischen Copolymers B der Komponente I vermischt werden, wobei dann während des Vermischens die vollständige Trocknung zu den als Komponente I eingesetzten Pfropfcopolymerisaten erfolgt.

Die erfindungsgemäßen Zusammensetzungen können zu Formteilen, wie Platten oder Halbzeuge, Folien oder Fasern oder auch zu Schäumen verarbeitet werden. Insbesondere können die erfindungsgemäßen Zusammensetzungen in Anwendungen eingesetzt werden, worin Sie in Kontakt mit Lebensmitteln kommen, sowie in Medizinprodukten oder Kinderspielzeug.

Diese können gemäß einer Ausführungsform der Erfindung nach den bekannten Verfahren der Thermoplastverarbeitung aus den erfindungsgemäßen Formmassen hergestellt werden. Insbesondere kann die Herstellung durch Thermoformen, Extrudieren, Spritzgießen, Kalandrieren, Hohlkörperblasen, Pressen, Presssintern, Tiefziehen oder Sintern, vorzugsweise durch Extrudieren oder Spritzgießen, erfolgen.

Die erfindungsgemäßen Zusammensetzungen enthaltend die speziell gewählten Mengenanteile der Komponenten A und B sowie Komponente II weisen gegenüber den im Stand der Technik beschriebenen vergleichbaren Formmassen eine verbesserte Fließfähigkeit bei der Herstellung von Formkörpern, gute oder verbesserte mechanischen Eigenschaften und/oder auch bei erhöhter Temperatur keine Migration des Weichmachers an die Oberfläche entsprechender Formteile auf.
Ein weiterer besonderer Vorteil der erfindungsgemäßen Zusammensetzungen ist, dass sie in Anwendungen eingesetzt werden, worin Sie in Kontakt mit Lebensmitteln kommen, sowie in Medizinprodukten oder Kinderspielzeug.

Die Erfindung wird anhand der nachfolgenden Beispiele näher erläutert.

### Beispiele

### Meßmethoden

Die Viskositätszahl der Styrolco- oder -terpolymere wurde nach DIN 53727 in 0,5 gew.-%iger DMF-Lösung bei 25°C bestimmt.

Die Charpy-Schlagzähigkeit gekerbter Probekörper a_{cN} [kJ/m²] und die Durchbiegung bei Schädigung S_{D} [mm] wurde nach DIN EN ISO 179-2/-2/1 eA(F) vom Juni 2000 bei 23°C und 50% rel. Feuchte bestimmt.

Die Izod-Schlagzähigkeit gekerbter Probekörper a_{iN} [kJ/m²] wurde nach DIN EN ISO 180/A(F) vom April 2007 bestimmt.

Die Schmelze-Volumenfließrate MVR [cm³/10 min] wurde nach DIN EN ISO 1133/B vom September 2005 bei 220°C und einer Belastung von 10 KP bestimmt.

Die Vicat-Erweichungstemperatur VST [°C] wurde nach DIN EN ISO 306/B vom Oktober 2004 bestimmt.

Der E-Modul Eₜ [MPa], die Zugspannung σ_{M} [MPa] und die Bruchspannung σ_{B} [MPa] wurden nach DIN EN ISO 527-2 von 1993 bestimmt.

Der Biege-Elastizitätsmodul E_{f} [MPa] und die Biegefestigkeit σ_{fM} [MPa] wurden nach DIN EN ISO 178 vom April 2006 bestimmt.

Der "Spiral Flow" von/bis [cm] wurde gemäß Norm T7.6.1. (Spiraldicke 2mm) bei 240/60°C bestimmt.

### Einsatzstoffe:

### Komponente I-i, entsprechend einer Mischung der Komponenten A-i und B-i:

Ein handelsübliches Acrylnitril-Butadien-Styrol-Copolymer (ABS), Terluran^{®} GP 35, der BASF SE, enthaltend ca. 71 Gew.-% einer Styrol-Acrylnitril-Copolymer-Hartphase (Komponente B-i) mit einer VZ von 64 ml/g und ca. 29 Gew.-% eines partikelförmigen Butadien-Pfropfkautschuks (Komponente A-i); die Gew.-% sind jeweils bezogen auf das Gesamtgewicht der Komponenten A-i und B-i und ergeben zusammen 100 Gew.-%.

### Komponente B-ii:

Ein Styrol-Acrylnitril-Copolymer (SAN) aus 76 Gew.-% Styrol und 24 Gew.-% Acrylnitril, charakterisiert durch eine Viskositätszahl VZ von 60ml/g.

### Komponente II-i

Ein kommerziell erhältlicher 1,2-Cyclohexandicarbonsäurediisononylester, CAS-Nummer: 166412-78-8, Hexamoll^{®} DINCH, der BASF SE.

### Herstellung von Formmassen und Formkörpern:

Die in Tabelle 1 genannten Gewichtsanteile der Komponenten A-i, B-i, B-ii und II-i wurden in einem Doppelschneckenextruder bei einer Massetemperatur von 200-220°C mit einer Schneckendrehzahl von 200 U/min und einem Durchsatz von 10 kg/h gemischt und direkt zu Probekörpern verarbeitet. Die in Tabelle 1 genannten Eigenschaften wurden bestimmt.

**Tabelle 1: Gewichtsanteile der Komponenten und Eigenschaften der daraus hergestellten Formmassen und Formkörper**

| Beispiel * | V-1 | 2 | 3 | 4 | V-5 | V-6 | V-7 |
|---|---|---|---|---|---|---|---|
| | | | | | | | |
| Gewichtsanteile [Gew.-%] ** | | | | | | | |
| A-i *** | 19,3 | 19,1 | 18,8 | 18,4 | 28,7 | 28,2 | 27,6 |
| B-i*** | 47,4 | 46,9 | 45,9 | 45,0 | 70,3 | 68,9 | 67,6 |
| B-ii | 33,3 | 33,0 | 32,4 | 31,8 | 0 | 0 | 0 |
| II-i | 0 | 1,0 | 2,9 | 4,8 | 1,0 | 2,9 | 4,8 |
| | | | | | | | |
| Gewichtsanteil der Komponente A bezogen auf das Gesamtgewicht der Komponenten A und B [Gew.-%] | 19,3 | 19,3 | 19,3 | 19,3 | 29,0 | 29,0 | 29,0 |
| | | | | | | | |
| Eigenschaften | | | | | | | |
| Charpy-Schlagzähigkeit a_{cN} [kJ/m²] | 7,3 | 8,2 | 10,5 | 11,9 | 27,3 | 28,5 | 28,2 |
| Durchbiegung bei Schädigung S_{D} [mm] | 1,7 | 1,6 | 1,9 | 2,1 | 3,0 | 3,1 | 3,2 |
| Izod-Schlagzähigkeit a_{iN} [kJ/m²] | 5,44 | 5,43 | 8,18 | 8,94 | 20,4 | 21,5 | 21,7 |
| Schmelze-Volumenfließrate MVR [cm³/10 min] | 42,5 | 48,6 | 67,7 | 87,8 | 38,7 | 46,0 | 54,8 |
| Vicat-Erweichungstemperatur VST [°C] | 98,5 | 96,8 | 92,3 | 89,5 | 92,3 | 89,2 | 86,6 |
| E-Modul Eₜ [MPa] | 2728 | 2703 | 2627 | 2542 | 2341 | 2285 | 2218 |
| Zugspannung σ_{M} [MPa] | 51,31 | 49,79 | 46,13 | 44,11 | 43,75 | 41,37 | 39,28 |
| Bruchspannung σ_{B} [MPa] | 38,08 | 38,10 | 33,63 | 31,58 | 32,61 | 33,28 | 29,82 |
| Biege-Elastizitätsmodul E_{f} [MPa] | 2891 | 2864 | 2780 | 2692 | 2446 | 2366 | 2288 |
| Biegefestigkeit σ_{M} [MPa] | 77,27 | 76,20 | 70,28 | 64,63 | 65,83 | 60,73 | 56,18 |
| "Spiral Flow" von [cm] / bis [cm] | 50/50 | n.b. **** | n.b. | 60,2 / 60,7 | n.b. | n.b. | n.b. |

| | | | | | | | |
|---|---|---|---|---|---|---|---|
| * mit "V" gekennzeichnete Beispiele sind Vergleichsbeispiele; ** Die Gew.-% der Komponenten A-i, B-i, B-ii und II-i sind jeweils bezogen auf das Gesamtgewicht dieser Komponenten und ergeben zusammen 100 Gew.-%. *** die Komponenten A-i und B-i wurden in vorgemischter Form (Komponente I-i) eingesetzt. **** n.b. bedeutet "nicht bestimmt" | | | | | | | |

Die Versuche belegen, dass die erfindungsgemäßen Zusammensetzungen enthaltend die speziell gewählten Mengenanteile der Komponenten A und B sowie Komponente II gegenüber den im Stand der Technik beschriebenen vergleichbaren Formmassen eine verbesserte Fließfähigkeit bei der Herstellung von Formkörpern und gute mechanische Eigenschaften aufweisen.

## Patentansprüche

1. Zusammensetzungen enthaltend
(i) mindestens eine Formmasse enthaltend die Komponenten A und B als Komponente (I), worin bedeuten
A) ein Pfropfcopolymerisat als Komponente A, umfassend
a1) 30 bis 90 Gew.-%, bezogen auf Komponente A, einer Pfropfgrundlage erhältlich durch Umsetzung von
a1.1) 50 bis 100 Gew.-%, bezogen auf Komponente a1, mindestens eines konjugierten Diens, und
a1.2) 0 bis 50 Gew.-%, bezogen auf Komponente a1, mindestens eines weiteren monoethylenisch ungesättigten Monomeren, und
a2) 10 bis 70 Gew.-%, bezogen auf Komponente A, einer Pfropfauflage erhältlich durch Umsetzung von
a2.1) 60 bis 95 Gew.-%, bezogen auf Komponente a2, mindestens eines vinylaromatischen Monomeren, besonders bevorzugt Styrol und/oder α-Methylstyrol,
a2.2) 5 bis 40 Gew.-%, bezogen auf Komponente a2, Acrylnitril und
a2.3) 0 bis 35 Gew.-%, bezogen auf Komponente a2, mindestens eines weiteren monoethylenisch ungesättigten Monomeren in Gegenwart der Pfropfgrundlage a1, und
B) eine thermoplastisches Copolymer als Komponente B erhältlich durch Umsetzung von
b1) 60 bis 100 Gew.-%, bezogen auf Komponente B, mindestens eines vinylaromatischen Monomeren, besonders bevorzugt Styrol und/oder α-Methylstyrol,
b2) 0 bis 40 Gew.-%, bezogen auf Komponente B, Acrylnitril, und
b3) 0 bis 40 Gew.-%, bezogen auf Komponente B, mindestens eines weiteren monoethylenisch ungesättigten Monomeren;
(ii) mindestens ein Cyclohexanpolycarbonsäurederivat der Formel (I); als Komponente (II) 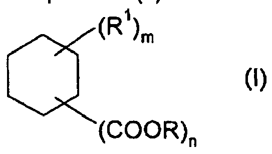 worin
R¹ für C₁-C₁₀-Alkyl oder C₃-C₈-Cycloalkyl steht,
m für 0, 1, 2 oder 3 steht,
n für 2, 3 oder 4 steht, und
R für Wasserstoff oder C₁-C₃₀-Alkyl steht;
oder
die Gruppe -(COOR)ₙ bildet ein Anhydrid der Formel 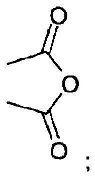
(iii) gegebenenfalls ein oder mehrere weitere Polymere als Komponente (III);
(iv) gegebenenfalls einen oder mehrere Zusatzstoffe als Komponente (IV); und
(v) gegebenenfalls einen oder mehrere Füll- und/oder Verstärkungsstoffe als Komponente (V),
**dadurch gekennzeichnet, dass** die Komponente (I) 11 bis 19,9 Gew.-% der Komponente A und 80,1 bis 89 Gew.-% der Komponente B umfasst, wobei die Gew.-% jeweils bezogen sind auf die Summe der Komponenten A und B und zusammen 100 Gew.-% ergeben.

2. Zusammensetzung nach Anspruch 1, enthaltend
(i) 95 bis 99,99 Gew.-% der Komponente (I);
(ii) 0,01 bis 5 Gew.-% der Komponente (II);
wobei die Summe der Komponenten I und II 100 Gew.-% ergibt; und
(iii) 0 bis 50 Gew.-%, bezogen auf das Gesamtgewicht der Komponenten I und II, der Komponente (III);
(iv) 0 bis 50 Gew.-%, bezogen auf das Gesamtgewicht der Komponenten I und II, der Komponente (IV); und
(v) 0 bis 50 Gew.-%, bezogen auf das Gesamtgewicht der Komponenten I und II, der Komponente (V).

3. Zusammensetzung nach Anspruch 1 oder 2, **dadurch gekennzeichnet, dass** die Komponenten A und B die folgenden Bedeutungen aufweisen:
Komponente A:
die Pfropfgrundlage a1 ist erhältlich durch Umsetzung von
50 bis 100 Gew.-%, bezogen auf die Komponente a1, der Komponente a1.1, und
0 bis 50 Gew.-%, bezogen auf die Komponente a1, der Komponente a1.2 ; und
die Pfropfauflage a2 ist erhältlich durch Umsetzung von
60 bis 95 Gew.-%, bezogen auf die Komponente a2, der Komponente a2.1;
5 bis 40 Gew.-%, bezogen auf die Komponente a2, der Komponente a2.2; und
0 bis 35 Gew.-%, bezogen auf die Komponente a2, der Komponente a2.3;
in Gegenwart der Pfropfgrundlage a1; und
Komponente B:
das thermoplastische Copolymer B ist erhältlich durch Umsetzung von 60 bis 100 Gew.-%. bezogen auf die Komponente B, der Komponente Styrol;
0 bis 40 Gew.-%, bezogen auf die Komponente B, der Komponente Acrylnitril.

4. Zusammensetzung nach einem der Ansprüche 1 bis 3, **dadurch gekennzeichnet, dass** die Komponente a2 aus den Komponenten a2.1 und a2.2 aufgebaut ist, worin bedeuten:
a2.1 Styrol, α-Methylstyrol oder ein Gemisch dieser Verbindungen, bevorzugt Styrol;
a.2.2 Acrylnitril.

5. Zusammensetzung nach einem der Ansprüche 1 bis 4, **dadurch gekennzeichnet, dass** die Komponente B aus den Komponenten b1 und b2 aufgebaut ist, worin bedeuten:
b1 Styrol, α-Methylstyrol oder ein Gemisch dieser Verbindungen, bevorzugt Styrol;
b2 Acrylnitril.

6. Zusammensetzung nach einem der Ansprüche 1 bis 5, **dadurch gekennzeichnet, dass** die Komponente (II) mindestens ein 1,2-Cyclohexandicarbonsäureester ausgewählt aus der Gruppe bestehend aus 1,2-Diisobutylcyclohexandicarbonsäureester, 1,2-Di-(2-ethylhexyl)-cyclohexandicarbonsäureester, 1,2-Diisononylcyclohexandicarbonsäureester und 1,2-Diisodecylcyclohexandicarbonsäureester, bevorzugt ausgewählt aus der Gruppe bestehend aus 1,2-Di-(2-ethylhexyl)-cyclohexandicarbonsäureester und 1,2-Diisononylcyclohexandicarbonsäureester ist, wobei 1,2-Diisononylcyclohexandicarbonsäureester besonders bevorzugt ist.

7. Verfahren zur Herstellung von Zusammensetzungen nach einem der Ansprüche 1 bis6, durch Schmelzevermischung der Komponenten (I), (II), ggf. (III), ggf. (IV) und ggf. (V).

8. Verwendung von Zusammensetzungen nach einem der Ansprüche 1 bis 6 zur Herstellung von Formteilen, Folien, Schäumen oder Fasern.

9. Formteile, Folien, Schäume oder Fasern enthaltend eine Zusammensetzung nach einem der Ansprüche 1 bis 6.

## Claims

1. Compositions comprising
(i) as component (I) at least one molding composition comprising components A and B, where
A) is a graft copolymer as component A, comprising
a1) from 30 to 90% by weight, based on component A, of a graft base obtainable via reaction of
a1.1) from 50 to 100% by weight, based on component a1, of at least one conjugated diene, and
a1.2) from 0 to 50% by weight, based on component a1, of at least one further monoethylenically unsaturated monomer, and
a2) from 10 to 70% by weight, based on component A, of a graft obtainable via reaction of
a2.1) from 60 to 95% by weight, based on component a2, of at least one vinylaromatic monomer, particularly preferably styrene and/or α-methylstyrene,
a2.2) from 5 to 40% by weight, based on component a2, of acrylonitrile, and
a2.3) from 0 to 35% by weight, based on component a2, of at least one further monoethylenically unsaturated monomer in the presence of the graft base a1, and
B) is a thermoplastic copolymer as component B obtainable via reaction of
b1) from 60 to 100% by weight, based on component B, of at least one vinylaromatic monomer, particularly preferably styrene and/or α-methylstyrene,
b2) from 0 to 40% by weight, based on component B, of acrylonitrile, and
b3) from 0 to 40% by weight, based on component B, of at least one further monoethylenically unsaturated monomer;
(ii) at least one cyclohexanepolycarboxylic acid derivative of the formula (I); as component (II) 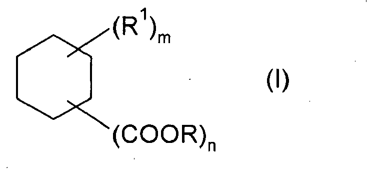 in which
R¹ is C₁-C₁₀-alkyl or C₃-C₈-cycloalkyl,
m is 0, 1, 2, or 3,
n is 2, 3, or 4, and
R is hydrogen or C₁-C₃₀-alkyl;
or
the group -(COOR)ₙ forms an anhydride of the formula 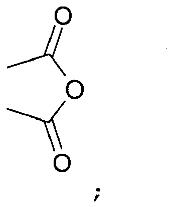
(iii) as component (III), optionally, one or more further polymers;
(iv) as component (IV), optionally, one or more additives;, and
(v) as component (V), optionally, one or more fillers and/or reinforcing materials,
**characterized in that** component (I) comprises from 11 to 19.9% by weight of component A and from 80.1 to 89% by weight of component B, where each of the % by weight values is based on the entirety of components A and B, and the total of those values is 100% by weight.

2. Composition according to Claim 1, comprising
(i) from 95 to 99.99% by weight of component (I) ;
(ii) from 0.01 to 5% by weight of component (II); where the entirety of components I and II gives 100% by weight; and
(iii) from 0 to 50% by weight, based on the total weight of components I and II, of component (III) ;
(iv) from 0 to 50% by weight, based on the total weight of components I and II, of component (IV); and
(v) from 0 to 50% by weight, based on the total weight of components I and II, of component (V).

3. Composition according to Claim 1 or 2, **characterized in that** the definitions of components A and B are as follows:
component A:
the graft base a1 is obtainable via reaction of from 50 to 100% by weight, based on component a1, of component a1.1, and
from 0 to 50% by weight, based on component a1, of component a1.2 ; and
the graft a2 is obtainable via reaction of from 60 to 95% by weight, based on component a2, of component a2.1;
from 5 to 40% by weight, based on component a2, of component a2.2; and
from 0 to 35% by weight, based on component a2, of component a2.3;
in the presence of the graft base a1; and
component B:
the thermoplastic copolymer B is obtainable via reaction of
from 60 to 100% by weight, based on component B, of the component styrene;
from 0 to 40% by weight, based on component B, of the component acrylonitrile.

4. Composition according to any of Claims 1 to 3, **characterized in that** component a2 is composed of components a2.1 and a2.2, where:
a2.1 is styrene, α-methylstyrene, or a mixture of these compounds, preferably styrene;
a2.2 is acrylonitrile.

5. Composition according to any of Claims 1 to 4, **characterized in that** component B is composed of components b1 and b2, where:
b1 is styrene, α-methylstyrene, or a mixture of these compounds, preferably styrene;
b2 is acrylonitrile.

6. Composition according to any of Claims 1 to 5, **characterized in that** component (II) is at least one cyclohexane-1,2-dicarboxylic ester selected from the group consisting of diisobutyl cyclohexane-1,2-dicarboxylate, di(2-ethylhexyl) cyclohexane-1,2-dicarboxylate, diisononyl cyclohexane-1,2-dicarboxylate, and diisodecyl cyclohexane-1,2-dicarboxylate, preferably selected from the group consisting of di(2-ethylhexyl) cyclohexane-1,2-dicarboxylate and diisononyl cyclohexane-1,2-dicarboxylate, particular preference being given to diisononyl cyclohexane-1,2-dicarboxylate.

7. Process for producing compositions according to any of Claims 1 to 6, by mixing components (I), (II) and, optionally, (III) and, optionally, (IV) and, optionally, (V), in the melt.

8. Use of compositions according to any of Claims 1 to 6 for producing moldings, foils, foams, or fibers.

9. Moldings, foils, foams, or fibers comprising a composition according to any of Claims 1 to 6.

## Revendications

1. Compositions, contenant :
(i) au moins un matériau de moulage contenant les composants A et B en tant que composant (I),
A) signifiant un copolymère greffé en tant que composant A, comprenant
a1) 30 à 90 % en poids, par rapport au composant A, d'une base de greffage pouvant être obtenue par mise en réaction de
a1.1) 50 à 100 % en poids, par rapport au composant a1, d'au moins un diène conjugué, et
a1.2) 0 à 50 % en poids, par rapport au composant a1, d'au moins un monomère monoéthyléniquement insaturé supplémentaire, et
a2) 10 à 70 % en poids, par rapport au composant A, d'un revêtement de greffage pouvant être obtenu par mise en réaction de
a2.1) 60 à 95 % en poids, par rapport au composant a2, d'au moins un monomère aromatique de vinyle, de manière particulièrement préférée le styrène et/ou l'a-méthylstyrène,
a2.2) 5 à 40 % en poids, par rapport au composant a2, d'acrylonitrile, et
a2.3) 0 à 35 % en poids, par rapport au composant a2, d'au moins un monomère monoéthyléniquement insaturé supplémentaire,
en présence de la base de greffage a1, et
B) un copolymère thermoplastique en tant que composant B, pouvant être obtenu par mise en réaction de
b1) 60 à 100 % en poids, par rapport au composant B, d'au moins un monomère aromatique de vinyle, de manière particulièrement préférée le styrène et/ou l'α-méthylstyrène,
b2) 0 à 40 % en poids, par rapport au composant B, d'acrylonitrile, et
b3) 0 à 40 % en poids, par rapport au composant B, d'au moins un monomère monoéthyléniquement insaturé supplémentaire ;
(ii) au moins un dérivé d'acide cyclohexanepolycarboxylique de formule (I) ; en tant que composant (II) 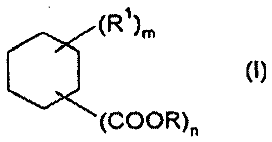 dans laquelle
R¹ représente alkyle en C₁-C₁₀ ou cycloalkyle en C₃-C₈,
m représente 0, 1, 2 ou 3,
n représente 2, 3 ou 4, et
R représente hydrogène ou alkyle en C₁-C₃₀ ;
ou le groupe -(COOR)ₙ forme un anhydride de formule 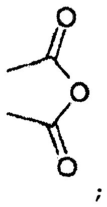
(iii) éventuellement un ou plusieurs polymères supplémentaires en tant que composant (III) ;
(iv) éventuellement un ou plusieurs additifs en tant que composant (IV) ; et
(v) éventuellement une ou plusieurs charges et/ou matières de renforcement en tant que composant (V), **caractérisées en ce que** le composant (I) comprend 11 à 19,9 % en poids du composant A et 80,1 à 89 % en poids du composant B, les % en poids se rapportant à chaque fois à la somme des composant A et B, et leur somme étant de 100 % en poids.

2. Composition selon la revendication 1, contenant :
(i) 95 à 99,99 % en poids du composant (I) ;
(ii) 0,01 à 5 % en poids du composant (II) ;
la somme des composants I et II étant de 100 % en poids ; et
(iii) 0 à 50 % en poids, par rapport au poids total des composants I et II, du composant (III) ;
(iv) 0 à 50 % en poids, par rapport au poids total du composant I et II, du composant (IV) ; et
(v) 0 à 50 % en poids, par rapport au poids total du composant I et II, du composant (V).

3. Composition selon la revendication 1 ou 2, **caractérisée en ce que** les composants A et B présentent les significations suivantes :
composant A :
la base de greffage a1 peut être obtenue par mise en réaction de
50 à 100 % en poids, par rapport au composant a1, du composant a1.1, et
0 à 50 % en poids, par rapport au composant a1, du composant a1.2 ; et
le revêtement de greffage a2 peut être obtenu par mise en réaction de
60 à 95 % en poids, par rapport au composant a2, du composant a2.1 ;
5 à 40 % en poids, par rapport au composant a2, du composant a2.2 ; et
0 à 35 % en poids, par rapport au composant a2, du composant a2.3 ;
en présence de la base de greffage a1 ; et
composant B :
le copolymère thermoplastique B peut être obtenu par mise en réaction de :
60 à 100 % en poids, par rapport au composant B, du composant styrène ;
0 à 40 % en poids, par rapport au composant B, du composant acrylonitrile.

4. Composition selon l'une quelconque des revendications 1 à 3, **caractérisée en ce que** le composant a2 est formé par les composants a2.1 et a2.2,
a2.1 signifiant le styrène, l'α-méthylstyrène ou un mélange de ces composés, de préférence le styrène ;
a2.2 signifiant l'acrylonitrile.

5. Composition selon l'une quelconque des revendications 1 à 4, **caractérisée en ce que** le composant B est formé par les composants b1 et b2
b1 signifiant le styrène, l'α-méthylstyrène ou un mélange de ces composés, de préférence le styrène ;
b2 signifiant l'acrylonitrile.

6. Composition selon l'une quelconque des revendications 1 à 5, **caractérisée en ce que** le composant (II) est au moins un ester d'acide 1,2-cyclohexanedicarboxylique choisi dans le groupe constitué par l'ester de l'acide 1,2-diisobutylcyclohexanedicarboxylique, l'ester de l'acide 1,2-di(2-éthylhexyl)-cyclohexanedicarboxylique, l'ester de l'acide 1,2-diisononylcyclohexanediocarboxylique et l'ester de l'acide 1,2-diisodécylcyclohexanedicarboxylique, de préférence choisi dans le groupe constitué par l'ester de l'acide 1,2-di-(2-éthylhexyl)-cyclohexanedicarboxylique et l'ester de l'acide 1,2-diisononylcyclohexanedicarboxylique, l'ester de l'acide 1,2-diisononylcyclohexanedicarboxylique étant particulièrement préférée.

7. Procédé de fabrication de compositions selon l'une quelconque des revendications 1 à 6, par mélange à l'état fondu des composants (I), (II), éventuellement (III), éventuellement (IV) et éventuellement (V).

8. Utilisation de compositions selon l'une quelconque des revendications 1 à 6 pour la fabrication de pièces moulées, de feuilles, de mousses ou de fibres.

9. Pièces moulées, feuilles, mousses ou fibres contenant une composition selon l'une quelconque des revendications 1 à 6.
